# EUROPÄISCHE PATENTSCHRIFT

(11) **EP 1 810 000 B1**
(45) Veröffentlichungstag und Bekanntmachung des Hinweises auf die Patenterteilung: **29.05.2013**
(21) Anmeldenummer: 05813700.1
(22) Anmeldetag: 11.11.2005
(51) Int. Cl.: G01M 11/00, G02B 6/255

(54) **VERFAHREN ZUR BESTIMMUNG DER EXZENTRIZITÄT EINES KERNS EINES LICHTWELLENLEITERS SOWIE VERFAHREN UND VORRICHTUNG ZUM VERBINDEN VON LICHTWELLENLEITERN**
METHOD FOR DETERMINING THE ECCENTRICITY OF AN OPTICAL FIBER CORE, AND METHOD AND DEVICE FOR CONNECTING OPTICAL FIBERS
PROCEDE POUR DETERMINER L'EXCENTRICITE D'UN NOYAU DE GUIDE D'ONDES OPTIQUES ET PROCEDE ET DISPOSITIF POUR CONNECTER DES GUIDES D'ONDES OPTIQUES

(30) Priorität: 12.11.2004 DE 102004054805
(43) Veröffentlichungstag der Anmeldung: 25.07.2007
(73) Patentinhaber: CCS Technology, Inc., Wilmington, DE 19803 (US)
(72) Erfinder: CONTAG, Karsten, 81373 München (DE)
(74) Vertreter: Epping - Hermann - Fischer
(86) Internationale Anmeldenummer: PCT/EP2005/012115
(87) Internationale Veröffentlichungsnummer: WO 2006/050974

(56) Entgegenhaltungen:
- US-A1- 2003 164 939
- PATENT ABSTRACTS OF JAPAN Bd. 009, Nr. 170 (P-373), 16. Juli 1985 (1985-07-16) -& JP 60 046509 A (NIPPON DENSHIN DENWA KOSHA), 13. März 1985 (1985-03-13) in der Anmeldung erwähnt
- PATENT ABSTRACTS OF JAPAN Bd. 009, Nr. 013 (P-328), 19. Januar 1985 (1985-01-19) & JP 59 160113 A (NIPPON DENSHIN DENWA KOSHA), 10. September 1984 (1984-09-10)

## Beschreibung

Die Erfindung betrifft ein Verfahren zur Bestimmung der Exzentrizität eines Kerns eines Lichtwellenleiters. Die Erfindung betrifft außerdem ein Verfahren und eine Vorrichtung zum Verbinden von Lichtwellenleitern.

### Stand der Technik

Üblicherweise umfasst ein Lichtwellenleiter eine Glasfaser mit einem Kern und einem den Kern umgebenden Mantel. Die Glasfaser weist innerhalb des Kerns einen höheren Brechungsindex auf als innerhalb des Mantels. Der über einem Querschnitt der Glasfaser aufgetragene Brechungsindex kann ein Stufenprofil oder ein Gradientenprofil aufweisen. Bei einem Stufenprofil weist der Brechungsindex innerhalb des Kerns und innerhalb des Mantels jeweils vom Ort unabhängige Werte auf. An der Grenze zwischen Mantel und Kern erfolgt ein sprunghafter Übergang vom dem einen auf den anderen der Werte. Bei einem Gradientenprofil nimmt der Brechungsindex innerhalb des Kerns von innen nach außen stetig ab, weist jedoch innerhalb des Mantels wiederum einen vom Ort unabhängigen Wert auf. An der Grenze zwischen Kern und Mantel gehen die Werte für den Brechungsindex stetig ineinander über.

Das Grundmaterial des Kerns und des Mantels der Glasfaser ist normalerweise Siliziumdioxid. Der Brechungsindex des Kerns kann gegenüber dem Brechungsindex des Mantels beispielsweise durch Dotieren des Siliziumdioxids mit Germanium erhöht werden. Alternativ kann der Brechungsindex des Mantels gegenüber dem Brechungsindex des Kerns beispielsweise durch Dotieren des Siliziumdioxids mit Fluor verringert werden. Da der Kern das optisch dichtere und der Mantel das optisch dünnere Medium ist, tritt für sich nahezu in Längsrichtung der Glasfaser ausbreitendendes Licht in einem Übergangsbereich vom Kern zum Mantel Totalreflexion auf. Unter vielfacher Totalreflexion am Mantel kann daher ein optisches Signal im Kern geführt werden.

Zum Schutz der Glasfaser enthält der Lichtwellenleiter außerdem eine die Glasfaser umgebende Faserbeschichtung. Bevor zwei Lichtwellenleiter miteinander verschweisst werden können, muss diese Faserbeschichtung entfernt werden.

Beim Verbinden zweier Lichtwellenleiter kommt es darauf an, eine Verbindungsstelle mit einer möglichst geringen Dämpfung zu schaffen. Ein an der Verbindungsstelle vom ersten in den zweiten der beiden Lichtwellenleiter übertretendes optisches Signal soll also einen möglichst geringen Leistungsverlust aufweisen. Ein seitlicher Versatz der Kerne der beiden Lichtwellenleiter an der Verbindungsstelle führt zu einer unerwünschten Dämpfung des optischen Signals. Die Dämpfung wird mit zunehmendem Versatz größer. Um eine Verbindungsstelle mit einer möglichst geringen Dämpfung zu erhalten, müssen die Kerne der Lichtwellenleiter vor oder während des Verbindens aufeinander ausgerichtet werden. Da die Kerne jedoch nicht zentral in dem Lichtwellenleiter verlaufen, ist der seitliche Versatz der Kerne nicht durch den seitlichen Versatz der Mäntel zweier zu verbindender Glasfasern bestimmbar:

Um die Kerne zweier zu verbindender Lichtwellenleiter aufeinander auszurichten, sind verschiedene Verfahren bekannt. Bei einem bekannten Verfahren werden zunächst die Lichtwellenleiter mit einem seitlichen Versatz an einer Verbindungsstelle zusammengeführt. Dann wird die Dämpfung von über die Verbindungsstelle geführtem Licht gemessen und der seitliche Versatz der Lichtwellenleiter so lange variiert, bis die Dämpfung einen möglichst geringen Wert aufweist.

Bei einer Gruppe weiterer aus dem Stand der Technik bekannter Verfahren wird die relative Lage der Kerne durch optische Messungen direkt bestimmt.

In der Druckschrift JP 55-096433 werden die Lichtwellenleiter mit Röntgenstrahlung beleuchtet. In den Druckschriften US 4,690,493 und US 4,506,947 werden die Lichtwellenleiter jeweils mit ultravioletter Strahlung beleuchtet. Zur Erhöhung des Brechungsindexes in den Kern eingebettete Germaniumatome werden dadurch zur Emission sichtbarer Fluoreszenzstrahlung angeregt. Die auf diese Weise sichtbar gemachten Kerne der Lichtwellenleiter können unter visueller Überwachung ausgerichtet werden. Bei sämtlichen beschriebenen Verfahren wird zur Anregung der Fluoreszenz der Kerne Strahlung eingesetzt, die keine Anteile im sichtbaren Bereich aufweist.

In der Druckschrift US 4,660,972 werden die Lichtwellenleiter aus zwei verschiedenen Richtungen mit parallelem Licht durchleuchtet. Am Rand eines Kerns eintretendes Licht wird zum Kern hin gebrochen, so dass der Rand des Kerns als dunkle Kontur im durchgelassenen Licht erkennbar wird. Aus in den zwei verschiedenen Richtungen von den Lichtwellenleitern durchgelassenen Lichtbündeln werden mittels zweier Spiegel und eines Strahlteilers auf einem Beobachtungsschirm zwei benachbarte Bilder der Kerne erzeugt. Die Bilder der Kerne werden dann unter ständiger direkter Sichtkontrolle aufeinander ausgerichtet.

In der Druckschrift US 4,067,651 wird eine Glasfaser mit kohärentem Licht aus einem Laser beleuchtet. Durch Streuung des Lichts an der Glasfaser wird Streulicht erzeugt. Aus einer Messung der Winkelverteilung der Intensität des Streulichts in einer quer zur Längsrichtung der Glasfaser stehenden Ebene kann die Verteilung des Brechungsindexes über dem durch diese Ebene festgelegten Querschnitt der Glasfaser ermittelt werden. Der mit dem Verfahren verbundene mathematische Aufwand ist allerdings erheblich.

In den Druckschriften JP 59-219707, JP 60-046509, JP 60-085350, US 4,825,092, US 4,882,497 und EP 0 256 539 wird an Lichtwellenleitern gebrochenes Licht jeweils aus mindestens einer Richtung beobachtet. Durch die Kerne erzeugte Strukturen in der Intensitätsverteilung werden mittels einer hochauflösenden Optik aufgelöst. Jedoch sind auch die Glasfasern selbst als optische Linsen wirksam. Um in der Bildebene der Optik eine scharfe Abbildung der Kerne zu erhalten, müssen daher die Lichtwellenleiter relativ zur Optik so positioniert werden, dass die Objektebene der Anordnung aus Glasfaser und Optik durch die Kerne verläuft. Die Optik muss also in Abhängigkeit von der Lage der Kerne in den Lichtwellenleitern fokussiert werden.

In der Druckschrift DE 39 39 497 A1 werden zu verbindende Lichtwellenleiter mit einem Lichtbogen bestrahlt und zur Lichtemission angeregt, wobei die Kerne im allgemeinen mehr sichtbares Licht abgeben als die Mäntel. Eine Beobachtungsoptik wird so fokussiert, dass die Kerne schärf abgebildet sind und aufeinander ausgerichtet werden können. Dieses Verfahren wird auch in den Druckschriften EP 0 687 928 A1 beziehungsweise US 5,570,446 eingesetzt. Die Kerne müssen während des gesamten Justiervorgangs sichtbar bleiben. Die Lichtwellenleiter müssen also für die gesamte Zeitspanne des Justiervorganges auf einer zur Sichtbarmachung der Kerne beziehungsweise zur Erzeugung des Lichtbogens ausreichenden Temperatur gehalten werden. Wenn eine solche Temperatur jedoch über eine Zeitspanne von mehreren Zehntelsekunden hinaus aufrechterhalten wird, erfolgt eine Verformung der Lichtwellenleiter, die eine erhöhte Dämpfung mit sich bringt. Ein Verschweissen von Lichtwellenleitern nach diesem Verfahren erfordert daher, dass der Justiervorgang in einer Zeitspanne von mehreren Zehntelsekunden, maximal innerhalb einer Sekunde, abgeschlossen wird. In einem Spleissgerät, das nach dem herkömmlichen Verfahren arbeitet, muss somit eine entsprechend hohe Rechenleistung bereitgestellt werden.

### Allgemeine Darstellung der Erfindung

Es ist die Aufgabe der Erfindung, ein Verfahren und eine Vorrichtung zum Verbinden von Lichtwellenleitern anzugeben, die ein Ausrichten und Verschweißen von Lichtwellenleitern erlauben, ohne dass eine zu verstärkter Dämpfung Anlass gebende Verformung der Lichtwellenleiter auftritt.

Die Aufgabe wird erfindungsgemäß gelöst durch ein Verfahren zur Bestimmung der Exzentrizität des Kerns eines Lichtwellenleiters mit den Merkmalen des Anspruchs 1, ein Verfahren zum Verbinden von mindestens zwei Lichtwellenleitern mit den Merkmalen des Anspruches 16 und eine Vorrichtung zum Verbinden von mindestens zwei Lichtwellenleitern mit den Merkmalen des Anspruchs 21. Bevorzugte Ausgestaltungen sind in den Unteransprüchen angegeben.

Das erfindungsgemäße Verfahren zur Bestimmung der Exzentrizität des Kerns umfasst mehrere Schritte. Es wird ein Lichtwellenleiter bereitgestellt, der einen Kern und einen den Kern umgebenden Mantel aufweist. In einem ersten Schritt wird ein Abschnitt des Lichtwellenleiters für eine vorher festgelegte Zeitspanne erwärmt, so dass durch Emission von Licht aus dem Kern und dem Mantel ein erstes Lichtbündel erzeugt wird. Eine erste Intensitätsverteilung, die durch das erste Lichtbündel hervorgerufen wird, wird gemessen und gespeichert. Eine Position eines Mittelpunkts des Kerns wird aus der gespeicherten ersten Intensitätsverteilung ermittelt. In einem zweiten Schritt wird der Abschnitt mit Licht beleuchtet und durch teilweise Brechung des Lichts an dem Kern und dem Mantel ein zweites Lichtbündel erzeugt. Eine zweite Intensitätsverteilung, die durch das zweite Lichtbündel hervorgerufen wird, wird gemessen und gespeichert. Aus der gespeicherten zweiten Intensitätsverteilung wird eine Position des Mantels ermittelt. Die Exzentrizität wird aus der ermittelten Position des Mittelpunkts des Kerns und der ermittelten Position des Mantels bestimmt, wobei die Exzentrizität eine Lage des Kerns bezogen auf eine Lage des Mantels angibt.

Im ersten Schritt des Verfahrens werden also die Lichtwellenleiter einer Wärmequelle ausgesetzt, um sie zur Emission von sichtbarem Licht anzuregen. In Abhängigkeit von eingebrachten Dotiersubstanzen weisen der Kern und der Mantel eines Lichtwellenleiters eine unterschiedliche Emissivität auf. Im allgemeinen emittiert der Kern mehr sichtbares Licht als der Mantel. Es ist jedoch auch möglich, dass der Kern weniger Licht emittiert als der Mantel. Aus der Messung der Intensitätsverteilung des emittierten Lichts wird die Lage des Kerns bestimmt. In dem zweiten Schritt wird eine Beleuchtung eingeschaltet, um den Lichtwellenleiter zu beleuchten. Aus der Messung der Intensitätsverteilung des durch den Lichtwellenleiter hindurchtretenden Lichts wird die Lage des Mantels bestimmt. Aus einer Kombination der Ergebnisse der beiden Messungen wird die relative Lage des Kerns zum Mantel beziehungsweise die Exzentrizität bestimmt. Unter Ausnutzung der Information über die Exzentrizität können die Lichtwellenleiter vor dem Verbinden seitlich gegeneinander versetzt und gegebenenfalls auch um die Längsachse rotiert werden, um einen Versatz der Kerne der beiden Lichtwellenleiter auszugleichen.

Die zweite Intensitätsverteilung kann vor oder nach der ersten Intensitätsverteilung gemessen werden. Der zweite Schritt kann also vor oder nach dem ersten Schritt durchgeführt werden. Im ersten Schritt wird der Lichtwellenleiter nur für wenige Zehntelsekunden erwärmt. Beide Schritte können innerhalb einer relativen kurzen Zeitspanne durchgeführt werden. In dieser Zeitspanne müssen lediglich die Daten der beiden Intensitätsverteilungen gespeichert werden. Die Bestimmung der Exzentrizität kann jederzeit auf der Grundlage der gespeicherten Intensitätsverteilungen erfolgen.

Vorzugsweise wird eine durch den Abschnitt des Lichtwellenleiters verlaufende Objektebene auf eine Bildebene abgebildet, wobei die erste Intensitätsverteilung und die zweite Intensitätsverteilung vorzugsweise unter Beibehaltung der Objektebene gemessen werden. Die Messungen der beiden Intensitätsverteilungen können also unter Verwendung derselben Aufnahmevorrichtung durchgeführt werden. Insbesondere wird die Fokussierung der Aufnahmevorrichtung zwischen den Messungen nicht verändert.

Die Objektebene kann so gewählt werden, dass der Kern und der Mantel hinreichend scharf auf die Bildebene abgebildet werden. Da jedoch auch der Lichtwellenleiter selbst als Linse wirksam ist, können der Mantel und der vom Mantel umgebene Kern im allgemeinen nicht beide mit optimaler Schärfe auf die Bildebene abgebildet werden. Da die Exzentrizität jedoch durch die Mittelpunkte von Kern und Mantel festgelegt ist, kann eine unscharfe Abbildung der Begrenzungen von Kern und Mantel in Kauf genommen werden.

Die erste Intensitätsverteilung und die zweite Intensitätsverteilung werden jeweils gemessen, indem Intensitätswerte in dem selben quer zum Abschnitt des Lichtwellenleiters verlaufenden Bereich erfasst werden. Ein Feld von Sensorelementen zur Erfassung der Intensitätswerte ist also zumindest entlang einer Linie oder Kurve angeordnet, wobei die Linie oder Kurve innerhalb einer quer zum Abschnitt des Lichtwellenleiters angeordneten Ebene verläuft.

Vorzugsweise wird die Exzentrizität über die Mittelpunkte von Kern und Mantel bestimmt. Aus der ersten Intensitätsverteilung wird die Lage eines Intensitätsextremums bestimmt, um die Position eines Kernmittelpunkts festzulegen. Insbesondere kann die Lage des Intensitätsextremums aus der Lage zweier Flanken bestimmt werden. Aus der zweiten Intensitätsverteilung werden die Lagen zweier weiterer Flanken bestimmt, um die Position eines Mantelmittelpunkts festzulegen. Der Abstand zwischen dem Kernmittelpunkt und dem Mantelmittelpunkt wird bestimmt, um eine Kernexzentrizität festzulegen. In Abhängigkeit von der Kernexzentrizität wird die Position des Mantelmittelpunkts verändert, um den Kernmittelpunkt in eine vorher festgelegte Position zu bringen.

Die Bestimmung der Exzentrizität über eine Bestimmung von Kern- und Mantelmittelpunkten kann auch dann mit ausreichender Genauigkeit durchgeführt werden, wenn die Breite des Intensitätsextremums der ersten Intensitätsverteilung relativ hoch oder die Steilheit der Flanken der ersten oder der zweiten Intensitätsverteilung relativ gering ist. Das Intensitätsextremum des Kerns kann insbesondere bei Glasfasern mit Gradientenprofil relativ breit sein. Die Bestimmung der Exzentrizität erlaubt es, die Lage des Kernmittelpunkts über die Lage des Mantelmittelpunkts festzulegen. Der Mantelmittelpunkt kann positioniert werden, ohne dass dem Lichtwellenleiter Wärme zugeführt werden muss, um den Kern sichtbar zu machen.

Die Exzentrizität des Kerns eines Lichtwellenleiters kann auch nach einem alternativen Verfahren bestimmt werden. Aus der ersten Intensitätsverteilung wird die Lage eines lokalen Extremums bestimmt, um die Position eines Kernmittelpunkts festzulegen. Statt dessen können aus der ersten Intensitätsverteilung auch die Lagen zweier Flanken bestimmt werden, um die Position des Kernmittelpunkts festzulegen. Aus der zweiten Intensitätsverteilung wird die Lage einer Flanke bestimmt, um die Position eines Mantelrandes festzulegen. Über die Lage des Extremums oder die Lagen der zwei Flanken der ersten Intensitätsverteilung und die Lage der Flanke der zweiten Intensitätsverteilung wird ein Abstand zwischen dem Kernmittelpunkt und dem Mantelrand festgelegt. In Abhängigkeit von dem Abstand wird die Position des Mantelrandes verändert, um den Kernmittelpunkt in eine vorher festgelegte Position zu bringen. Die Kernexzentrizität kann aus den Positionen von Kern und Mantelrand und dem Durchmesser des Lichtwellenleiters bestimmt werden. Wegen der begrenzten Steilheit der Flanke der zweiten Intensitätsverteilung ist die Position des Mantelrandes nur unscharf festgelegt. Dennoch können die Mantelränder zweier verschiedener Lichtwellenleiter, für die jeweils die Lage der Flanke der zweiten Intensitätsverteilung bekannt ist, anhand der beiden Flanken relativ genau aufeinander ausgerichtet werden.

Der Abschnitt des Lichtwellenleiters wird vorzugsweise nur für eine kurze Zeitspanne erwärmt, so dass eine Verformung ausbleibt. Eine länger als wenige Zehntelsekunden anhaltende Wärmezufuhr würde eine Verformung der Glasfaser sowie eine Diffusion der eingebrachten Dotierstoffe und damit eine verstärkte Dämpfung optischer Signale bewirken. Insbesondere kann der Abschnitt des Lichtwellenleiters erwärmt werden, indem für eine Zeitspanne von mehreren Zehntelsekunden, maximal für eine Sekunde, ein Lichtbogen oder ein Laserstrahl erzeugt wird. Ein genauer Wert für die zur Sichtbarmachung des Kerns notwendige Zeitspanne ist abhängig vom Grundmaterial und der Dotierung der Glasfaser sowie der eingebrachten Wärmeleistung. Innerhalb der Zeitspanne muss lediglich die erste Intensitätsverteilung erfasst werden. Das Erfassen der zweiten Intensitätsverteilung und das Auswerten der Intensitätsverteilungen zur Ermittlung der Lagen von Kern und Mantel oder der Exzentrizität des Kerns kann erfolgen, ohne dass dem Abschnitt.weiter Wärme zugeführt wird.

Die ersten und zweiten Intensitätsverteilungen werden vorzugsweise gemessen, indem Intensitätswerte in einem ersten Bereich erfasst werden, wobei sich der erste Bereich quer zur Längsachse des Abschnitts des Lichtwellenleiters in einer ersten Richtung erstreckt. Sensorelemente zur Erfassung von Intensitätswerten sind also zumindest entlang einer Linie oder Kurve angeordnet, die sich in einem Abstand von dem Abschnitt und quer zur Längsachse des Abschnitts in der ersten Richtung erstreckt. Der Abschnitt des Lichtwellenleiters kann in Abhängigkeit von den im ersten Bereich erfassten Intensitätswerten bezüglich der ersten Richtung positioniert werden.

Die ersten und zweiten Intensitätsverteilungen werden vorzugsweise gemessen, indem jeweils Intensitätswerte in einem zweiten Bereich erfasst werden, wobei sich der zweite Bereich quer zur Längsachse des Abschnitts und quer zum ersten Bereich in einer zweiten Richtung erstreckt. Sensorelemente zur Erfassung von Intensitätswerten sind also auch längs einer Linie oder Kurve angeordnet, die sich in einem Abstand vom Abschnitt des Lichtwellenleiters quer zur Längsachse des Abschnitts in der zweiten Richtung erstreckt. Der Abschnitt des Lichtwellenleiters kann in Abhängigkeit von den im zweiten Bereich erfassten Intensitätswerten bezüglich der zweiten Richtung positioniert werden.

Die erste Richtung und die zweite Richtung können beispielsweise senkrecht aufeinander stehen. Die erste Richtung und die zweite Richtung können aber auch einen anderen Winkel anschließen. Ein Erfassen von Intensitätswerten längst der ersten Richtung und der zweiten Richtung erlaubt es, den Abschnitt des Lichtwellenleiters innerhalb einer zur Längsachse senkrechten Ebene zu positionieren.

Die Intensitätswerte werden vorzugsweise gleichzeitig im ersten Bereich und im zweiten Bereich erfasst. Die Intensitätswerte können aber auch zunächst im ersten Bereich und dann im zweiten Bereich erfasst werden. Für eine gleichzeitige Erfassung der Intensitätswerte im ersten und im zweiten Bereich sind zwei entsprechend angeordnete Felder von Sensorelementen erforderlich. Für eine aufeinander folgende Erfassung der Intensitätswerte im ersten und zweiten Bereich ist ein einziges Feld von Sensorelementen ausreichend. Das Feld von Sensorelementen kann zunächst im ersten Bereich und dann im zweiten Bereich angeordnet werden. Alternativ kann mit Hilfe eines optischen Systems, das beispielsweise einen schwenkbaren Spiegel umfasst, zunächst das auf den ersten Bereich fallende Licht und dann das auf den zweiten Bereich fallende Licht auf das Feld von Sensorelementen gelenkt werden. Allerdings muss bei aufeinander folgenden Messungen der ersten Intensitätsverteilung im ersten Bereich und im zweiten Bereich der Abschnitt des Lichtwellenleiters zweimal nacheinander erwärmt werden.

Das erfindungsgemäße Verfahren zum Verbinden von mindestens zwei Lichtwellenleitern wird in mehreren Schritten durchgeführt. Es werden mindestens zwei Lichtwellenleiter bereitgestellt, die jeweils einen Kern und einen den Kern umgebenden Mantel aufweisen. In einem ersten Schritt werden Abschnitte der mindestens zwei Lichtwellenleiter für eine begrenzte Zeitspanne erwärmt, so dass erste Lichtbündel erzeugt werden, wobei jeweils eines der ersten Lichtbündel durch Emission von Licht aus dem Kern und dem Mantel jeweils eines der Abschnitte erzeugt wird. Es werden erste Intensitätsverteilungen gemessen und gespeichert, wobei jeweils eine der ersten Intensitätsverteilungen durch jeweils eines der ersten Lichtbündel hervorgerufen wird. Aus den gespeicherten ersten Intensitätsverteilungen werden jeweilige Positionen von Mittelpunkten der Kerne der mindestens zwei Lichtwellenleiter ermittelt. In einem zweiten Schritt werden die Abschnitte der Lichtwellenleiter mit Licht beleuchtet, so dass zweite Lichtbündel erzeugt werden, wobei jeweils eines der zweiten Lichtbündel durch teilweise Brechung des Lichts an dem Kern und dem Mantel jeweils eines der Abschnitte erzeugt wird. Es werden zweite Intensitätsverteilungen gemessen und gespeichert, wobei jeweils eine der zweiten Intensitätsverteilungen durch jeweils eines der zweiten Lichtbündel hervorgerufen wird. Aus den gespeicherten zweiten Intensitätsverteilungen werden jeweilige Positionen der Mäntel der mindestens zwei Lichtwellenleiter ermittelt. Aus den ermittelten jeweiligen Positionen der Mittelpunkte der Kerne der mindestens zwei Lichtwellenleiter und den ermittelten jeweiligen Positionen der Mäntel der mindestens zwei Lichtwellenleiter wird eine relative Exzentrizität bestimmt, wobei die relative Exzentrizität einen Versatz der jweiligen Kerne bezogen auf einen Versatz der jeweiligen Mäntel der Abschnitte der mindestens zwei Lichtwellenleiter angibt. Nachfolgend wird in Abhängigkeit von der relativen Exzentrizität der Versatz zwischen den Mänteln der jeweils zwei Abschnitte eingestellt, um den Versatz zwischen den Kernen der jeweils zwei Abschnitte festzulegen. Danach werden die jeweiligen Abschnitte der mindestens zwei Lichtwellenleiter verbunden.

In dem ersten Schritt werden also die Lichtwellenleiter für eine begrenzte Zeitspanne erwärmt und die ersten Intensitätsverteilungen gemessen. Sobald die Intensitätswerte der ersten Intensitätsverteilungen gespeichert sind, wird die Zufuhr von Wärme unterbrochen. Auf diese Weise können Verformungen der Lichtwellenleiter in der Umgebung der Verbindungsstelle vermieden werden. In dem zweiten Schritt werden die Abschnitte der Lichtwellenleiter beleuchtet und die zweiten Intensitätsverteilungen gemessen. Sobald die Intensitätswerte der zweiten Intensitätsverteilung erfasst sind kann auch die Beleuchtung abgeschaltet werden. Die relative Exzentrizität ist durch die Differenz zwischen dem Versatz der Kerne, genauer dem Versatz der Kernmittelpunkte, und dem Versatz der Mäntel, genauer dem Versatz der Mantelmittelpunkte, gegeben und erlaubt es daher den Versatz der Kerne über den Versatz der Mäntel einzustellen.

Vorzugsweise wird aus jeweils einer der ersten Intensitätsverteilungen die Lage eines lokalen Extremums bestimmt, um die Position jeweils eines Kernmittelpunkts festzulegen. Die Lage des lokalen Extremums, beispielsweise einer Intensitätsspitze, kann insbesondere aus den Lagen zweier Flanken bestimmt werden. Aus jeweils einer der zweiten Intensitätsverteilungen werden die Lagen zweier weiterer Flanken bestimmt, um die Position jeweils eines Mantelmittelpunkts festzulegen. Um die relative Exzentrizität von jeweils zweien der Abschnitte festzulegen, wird ein erster Versatz zwischen den Kernmittelpunkten der jeweils zwei der Abschnitte bestimmt, ein zweiter Versatz zwischen dem Mantelmittelpunkten der jeweils zwei der Abschnitte bestimmt und eine Differenz zwischen dem ersten Versatz und dem zweiten Versatz gebildet. Es wird ein Versatz der Mantelmittelpunkte eingestellt, um einen Versatz der Kernmittelpunkte festzulegen.

Die Flanken der ersten und zweiten Intensitätsverteilungen, die durch die Ränder der Kerne und Mäntel bewirkt werden, weisen infolge der unscharfen Abbildung der Lichtwellenleiter im allgemeinen nur eine begrenzte Steilheit auf. Die Ränder der Kerne und Mäntel können also nicht sehr genau festgelegt werden. Die Positionen der Kern- und Mantelmittelpunkte sind jedoch zuverlässiger zu bestimmen, da jeweils eine ansteigende und eine absteigende Flanke im wesentlichen axialsymmetrisch um die Lage eines Kern- oder Mantelmittelpunkts angeordnet sind.

Die jeweils eine erste Intensitätsverteilung und die jeweils eine zweite Intensitätsverteilung eines der Abschnitte werden vorzugsweise gemessen, indem Intensitätswerte in dem selben sich quer zu dem einen der Abschnitte erstreckenden Bereich erfasst werden. Es kann also das selbe Feld von Sensorelementen verwendet werden, um die erste Intensitätsverteilung und die zweite Intensitätsverteilung für jeweils einen der Abschnitte zu erfassen.

Die erste Intensitätsverteilung und die zweite Intensitätsverteilung werden vorzugsweise gemessen, indem Intensitätswerte in ersten Bereichen erfasst werden, wobei jeweils einer der ersten Bereiche Licht von einem der Abschnitte empfängt und sich quer zur Längsachse des einen der Abschnitte in einer ersten Richtung erstreckt. Ein Feld von Sensorelementen zur Erfassung der Intensitätswerte ist in einem Abstand von den Lichtwellenleitern angeordnet und erstreckt sich quer zur Längsachse eines der Abschnitte in einer ersten Richtung.

Die ersten Intensitätsverteilungen und die zweiten Intensitätsverteilungen werden vorzugsweise gemessen, indem Intensitätswerte in zweiten Bereichen erfasst werden, wobei jeweils einer der zweiten Bereiche Licht von einem der Abschnitte empfängt, sich quer zur Längsachse des einen der Abschnitte erstreckt und sich quer zu einem der ersten Bereiche in einer zweiten Richtung erstreckt. Ein Feld von Sensorelementen zur Erfassung der Intensitätswerte ist in einem Abstand von den Lichtwellenleitern angeordnet und erstreckt sich quer zur Längsachse eines der Abschnitte in einer zweiten Richtung.

Die erste Richtung und die zweite Richtung können senkrecht aufeinander stehen oder einen anderen Winkel einschließen. Indem die erste Intensitätsverteilung und die zweite Intensitätsverteilung für jeweils einen der Abschnitte in dem ersten Bereich und in dem zweiten Bereich erfasst werden, können die Lagen des Kerns und des Mantels innerhalb einer quer zu Längsachse des jeweils einen der Abschnitte verlaufenden Ebene festgelegt werden.

Die erfindungsgemäße Vorrichtung zum Verbinden von mindestens zwei Lichtwellenleitern, die jeweils einen Kern und einen den Kern umgebenden Mantel aufweisen, umfasst mehrere Komponenten. Zur Erwärmung von jeweiligen Abschnitten der Lichtwellenleiter und zur Erzeugung erster Lichtbündel, die jeweils durch Emission von Licht durch den Kern und den Mantel eines der Abschnitte bewirkt sind, ist eine Wärmequelle vorgesehen. Zur Fixierung der Abschnitte der Lichtwellenleiter ist eine Haltevorrichtung vorgesehen, wobei die Haltevorrichtung auch zum Positionieren der Abschnitte ausgebildet ist. Zur Beleuchtung der Abschnitte der Lichtwellenleiter und zur Erzeugung zweiter Lichtbündel, die jeweils durch Brechung von Licht an dem Kern und dem Mantel eines der Abschnitte bewirkt sind, ist eine Beleuchtungseinrichtung vorgesehen. Zur Messung von ersten Intensitätsverteilungen, die durch die ersten Lichtbündel bewirkt sind, und zur Messung von zweiten Intensitätsverteilungen, die durch die zweiten Lichtbündel bewirkt sind, ist eine Detektionseinrichtung vorgesehen. Darüber hinaus ist eine Speichereinheit zur Speicherung der ersten und zweiten Intensitätsverteilungen vorgesehen. Zur Steuerung der Haltevorrichtung ist eine Steuereinrichtung vorgesehen, die dazu ausgebildet ist, einen Versatz der Mäntel in Abhängigkeit von den gespeicherten ersten und zweiten Intensitätsverteilungen einzustellen, um einen vorher festgelegten Versatz der Kerne zu bewirken.

Die erfindungsgemäße Vorrichtung ist also dazu ausgebildet, in zwei aufeinander folgenden Schritten eine erste Intensitätsverteilung und eine zweite Intensitätsverteilung zu bestimmen und die Enden zweier Lichtwellenleiter in Abhängigkeit von der ersten Intensitätsverteilung und der zweiten Intensitätsverteilung relativ zueinander zu positionieren. Die Wärmequelle führt den Lichtwellenleitern nur während der Messung der ersten Intensitätsverteilung Wärme zu. Während der Messung der zweiten Intensitätsverteilung, der Auswertung der Messergebnisse und der Positionierung der Lichtwellenleiter ist die Wärmequelle dagegen abgeschaltet. Die Beleuchtungseinrichtung bestrahlt die Lichtwellenleiter während der Messung der zweiten Intensitätsverteilung mit sichtbarem Licht und ist während der Messung der ersten Intensitätsverteilung abgeschaltet. Während der Auswertung der Messergebnisse und der Positionierung der Lichtwellenleiter ist die Beleuchtungseinrichtung vorzugsweise eingeschaltet, da das Ausrichten der Mantelränder vorzugsweise unter Sichtkontrolle erfolgt. Eine bei abgeschalteter Beleuchtungseinrichtung erfolgende vollautomatische Positionierung in Abhängigkeit von den Messungen der ersten und zweiten Intensitätsverteilungen ist jedoch ebenfalls denkbar. Die Messung der zweiten Intensitätsverteilung, die Auswertung der Messergebnisse und die Positionierung der Lichtwellenleiter wird infolge des Abschaltens der Wärmequelle ohne thermische Beanspruchung der Lichtwellenleiter durchgeführt. Entsprechend sind die Anforderungen an die Auswertungsgeschwindigkeit und die Positioniergeschwindigkeit für ein Spleißgerät, das die erfindungsgemäße Vorrichtung enthält, geringer.

Vorzugsweise ist die Wärmequelle dazu ausgebildet einen Lichtbogen zu erzeugen. Insbesondere umfasst die Wärmequelle Schweißelektroden zu Erzeugung des Lichtbogens. Die Wärmequelle kann also sowohl zur Erzeugung der ersten Lichtbündel als auch zum Verschweißen von Lichtwellenleitern eingesetzt werden.

Die Haltevorrichtung ist vorzugsweise zur Positionierung der Abschnitte der Lichtwellenleiter in einer Längsrichtung und in zwei Querrichtungen ausgebildet. Die Längsrichtung ist durch Längsachsen der zu verbindenden Lichtwellenleiter festgelegt. Die beiden Querrichtungen sind quer, vorzugsweise senkrecht zu der Längsrichtung orientiert und schließen einen beliebigen Winkel, vorzugsweise jedoch 60° oder 90°, ein. Für die Positionierung der Endabschnitte in den drei Richtungen ist eine entsprechende Anzahl von Aktoren in der Haltevorrichtung vorgesehen, wobei die Aktoren durch die Steuereinrichtung betätigbar sind.

Die Detektionseinrichtung umfasst vorzugsweise mindestens eine Aufnahmevorrichtung mit einer Abbildungsoptik und einem Sensor, der ein Feld von Sensorelementen umfasst. Die Abbildungsoptik weist eine durch die Abschnitte der Lichtwellenleiter verlaufende Objektebene und eine durch das Feld von Sensorelementen verlaufende Bildebene auf. Die Objektebene ist so eingestellt, dass die Kerne und die Mäntel der Abschnitte hinreichend scharf auf die Bildebene abgebildet werden.

Es ist im allgemeinen nicht möglich, sowohl die Kerne als auch die Mäntel vollkommen scharf abzubilden. Dies rührt daher, dass auch die Lichtwellenleiter selbst als Linse wirken. Der die Abbildung des Mantels beschreibende Strahlengang hängt nur von den optischen Eigenschaften der Abbildungsoptik ab. Der die Abbildungen des Kerns beschreibende Strahlengang hängt dagegen von den optischen Eigenschaften der Abbildungsoptik und den optischen Eigenschaften des den Kern umgebenden Mantels des Lichtwellenleiters ab. Da zur Bestimmung der Exzentrizität oder der relativen Exzentrizität eine vollkommen scharfe Abbildung der Kerne und der Mäntel nicht benötigt wird, kann die Messung der ersten Intensitätsverteilung und der zweiten Intensitätsverteilung mit der selben Einstellung für die Objektebene, dass heißt mit der selben Fokussierung der Abbildungsoptik, durchgeführt werden. Eine Durchführung der Messungen der ersten Intensitätsverteilung und der zweiten Intensitätsverteilung mit der selben Fokussierung ist vorteilhaft, weil in diesem Fall die Abbildungseigenschaften, dass heißt die Zuordnung zwischen Bereichen der Objektebene und Bereichen der Bildebene für beide Messungen gleich sind.

Der Sensor enthält vorzugsweise ein flächenhaft angeordnetes Feld von Sensorelementen zur Erfassung von Intensitätswerten der ersten und zweiten Intensitätsverteilungen. Auf ein solches Feld kann ein Längsschnitt durch die Abschnitte der Lichtwellenleiter abgebildet werden. Zur Bestimmung der Intensitätswerte der ersten und zweiten Intensitätsverteilungen für jeweils einen der Abschnitte werden diejenigen der Sensorelemente herangezogen, die entlang einer quer zur Längsrichtung des Abschnittes verlaufenden Linie angeordnet sind.

Der Sensor kann auch lediglich ein linienhaft angeordnetes Feld von Sensorelementen zur Erfassung von Intensitätswerten der ersten und zweiten Intensitätsverteilungen enthalten. Ein solcher Sensor kann nur Intensitätswerte für eine erste oder eine zweite Intensitätsverteilung zu jeweils einem der Abschnitte erfassen. Die ersten und zweiten Intensitätsverteilungen verschiedener Abschnitte müssen also nacheinander gemessen werden.

Die Detektionseinrichtung umfasst vorzugsweise mindestens zwei Aufnahmevorrichtungen mit jeweils einer optischen Achse. Die optischen Achsen eines ersten und zweiten der mindestens zwei Aufnahmevorrichtungen sind vorzugsweise quer zueinander und quer zur Längsachse der Abschnitte orientiert. Durch die Verwendung der mindestens zwei Aufnahmevorrichtungen können die Lagen des Kerns und des Mantels in einer quer zur Längsachse verlaufenden Ebene eindeutig festgelegt werden.

Die Abschnitte der mindestens zwei Lichtwellenleiter sind vorzugsweise in Strahlengängen angeordnet, die jeweils zwischen einer Lichtquelle der Beleuchtungseinrichtung und einem der mindestens zwei optischen Abbildungssysteme verlaufen. Es kann für jedes der optischen Abbildungssysteme eine eigene Lichtquelle vorgesehen sein. Es ist aber auch möglich, eine Beleuchtungseinrichtung mit nur einer Lichtquelle und einer entsprechenden Anzahl von Spiegeln zur Erzeugung der gewünschten Strahlengänge vorzusehen.

### Kurze Beschreibung der Figuren

Die Figur 1 zeigt eine Ausgestaltung der Vorrichtung zum Verbinden zweier Lichtwellenleiter gemäß der vorliegenden Erfindung.

Die Figur 2A zeigt eine Anordnung zur Erfassung von Intensitätswerten der ersten Intensitätsverteilung gemäß einer Ausgestaltung der vorliegenden Erfindung.

Die Figur 2B zeigt eine Anordnung zur Erfassung von Intensitätswerten der zweiten Intensitätsverteilung gemäß einer Ausgestaltung der vorliegenden Erfindung.

Die Figur 3A zeigt einen Lichtwellenleiter im Querschnitt.

Die Figur 3B zeigt eine Anordnung von zwei Lichtwellenleitern im Längsschnitt.

Die Figur 4A zeigt eine nach dem Verfahren der Erfindung ermittelte erste Intensitätsverteilung.

Die Figur 4B zeigt eine nach dem Verfahren der Erfindung ermittelte zweite Intensitätsverteilung.

Die Figur 5A zeigt eine photographische Aufnahme des von den Lichtwellenleitern emittierten Lichts.

Die Figur 5B zeigt eine photographische Aufnahme des von den Lichtwellenleitern gebrochenen Lichts der Beleuchtungseinrichtung.

### Erläuterung von Ausführungsbeispielen

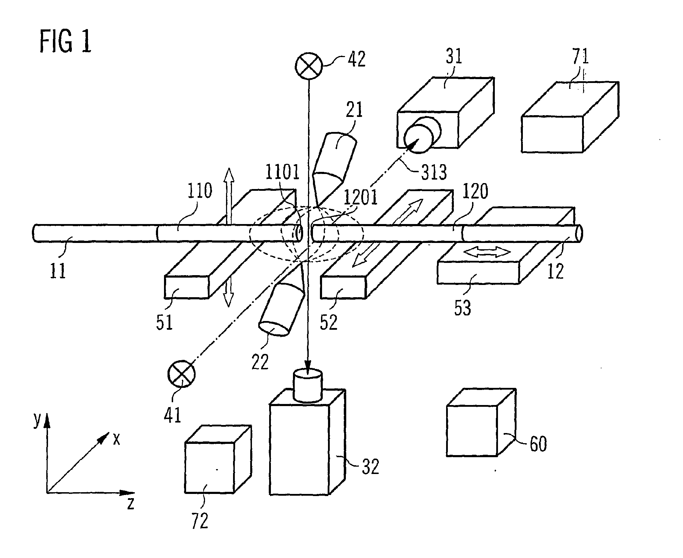

In Figur 1 ist eine Ausgestaltung der Vorrichtung zum Verbinden zweier Lichtwellenleiter dargestellt. Die Abbildung zeigt ein Spleissgerät für das Fusionsschweissen zweier Lichtwellenleiter. Jeder der Lichtwellenleiter 11 und 12 umfasst eine Glasfaser mit einem Kern und einem den Kern umgebenden Mantel. Das Spleissgerät umfasst eine zum Fixieren und Positionieren der Lichtwellenleiter 11 und 12 ausgebildete Haltevorrichtung mit den Halterungen 51, 52 und 53. Die in die Haltevorrichtung eingelegten Lichtwellenleiter 11 und 12 weisen Abschnitte 110 und 120 auf, an denen die Glasfasern durch Entfernen der Faserbeschichtungen freigelegt sind. Die Endbereiche 1101 und 1201 der Abschnitte 110 und 120 sind einander gegenüberliegend angeordnet. Die Halterungen 51 und 52 weisen jeweils V-förmige Rinnen auf, die zur Sicherung der Lichtwellenleiter 11 und 12 gegen horizontales Verrutschen dienen. Die Halterung 51 ist zur Positionierung des Lichtwellenleiters 11 in einer vertikalen Querrichtung Y ausgebildet. Die Halterung 52 ist zur Positionierung des Lichtwellenleiters 12 in einer horizontalen Querrichtung X ausgebildet. Die Halterung 53 ist zur Positionierung des Lichtwellenleiters in einer Längsrichtung Z durch Verschieben längs der Rinne der Halterung 52 ausgebildet. Das Spleissgerät umfasst außerdem eine Wärmequelle zur Erwärmung der jeweiligen Abschnitte 110 und 120. Die Wärmequelle umfasst zwei einander gegenüberliegend angeordnete Schweisselektroden 21 und 22 zur Erzeugung eines Lichtbogens um die Endbereiche 1101 und 1201 der Lichtwellenleiter 11 und 12. Die Strahlungsleistung des Lichtbogens ist zum Verschweissen der Lichtwellenleiter ausreichend. Das Spleissgerät umfasst außerdem eine Detektionseinrichtung mit den Aufnahmevorrichtungen 31 und 32. Jede der beiden Aufnahmevorrichtungen 31 und 32 ist zur Erfassung von ersten und zweiten Lichtbündeln ausgebildet, die von den Abschnitten 110 und 120 der Lichtwellenleiter 11 und 12 ausgehen. Das Spleissgerät umfasst außerdem eine Beleuchtungseinrichtung mit Lichtquellen 41 und 42. Die Abschnitte 110 und 120 sind in den Strahlengängen zwischen jeweils einer der Lichtquellen 41 und 42 und einer der Aufnahmevorrichtungen 31 und 32 angeordnet. Das Spleissgerät umfasst ferner die Steuereinrichtung 60 zur Steuerung der Wärmequelle, der Beleuchtungseinrichtung, der Aufnahmevorrichtung und der Haltevorrichtung. Die Steuereinrichtung 60 ist zur Positionierung der Lichtwellenleiter 11 und 12 in Abhängigkeit von durch die Aufnahmevorrichtungen erfassten Intensitätsverteilungen ausgebildet.

Die Steuereinrichtung ist erfindungsgemäß zur Durchführung eines Verfahrens mit mehreren Schritten ausgebildet. In einem ersten Schritt wird die Wärmequelle für eine kurze Zeitspanne eingeschaltet. An die Schweisselektroden 21 und 22 wird also eine Spannung angelegt, die zur Ausbildung des Lichtbogens führt. In die Glasfasern sind Dotierstoffe, beispielsweise Germanium oder Fluor, eingebracht, um unterschiedliche Brechungsindices in Kern und Mantel zu erzeugen. In Abhängigkeit von der Dotierung verändert sich auch die Emissivität, so dass die Kerne und Mäntel der Glasfasern in den Abschnitten 110 und 120 in unterschiedlichem Maße zur Emission von Licht angeregt werden. Gleichzeitig werden die Abschnitte 110 und 120 durch die Strahlungsleistung des Lichtbogens erwärmt. Bereits nach wenigen Zehntelsekunden wird der Lichtbogen wieder abgeschaltet, um eine zu verstärkter Dämpfung optischer Signale Anlass gebende Verformung der Lichtwellenleiter 11 und 12 zu vermeiden. In der Zeitspanne, in der die Wärmequelle eingeschaltet und die Kerne der Lichtwellenleiter zur Emission sichtbaren Lichts angeregt sind, werden mit den beiden Aufnahmevorrichtungen 31 und 32 erste Intensitätsverteilungen des von den Kernen und Mänteln in den Abschnitten 110 und 120 emittierten Lichts gemessen und in Speichereinheiten 71 und 72 gespeichert.

In einem zweiten Schritt wird die Beleuchtungseinrichtung für eine gewisse Zeitspanne eingeschaltet. Das von den Lichtquellen 41 und 42 erzeugte Licht wird an den Kernen und Mänteln der freigelegten Glasfasern gebrochen. Während die Beleuchtungseinrichtung eingeschaltet ist, werden mit den beiden Aufnahmevorrichtungen 31 und 32 zweite Intensitätsverteilungen des durch die Kerne und Mäntel an den Abschnitten 110 und 120 teilweise gebrochenen Lichts gemessen und in den Speichereinheiten 71 und 72 gespeichert.

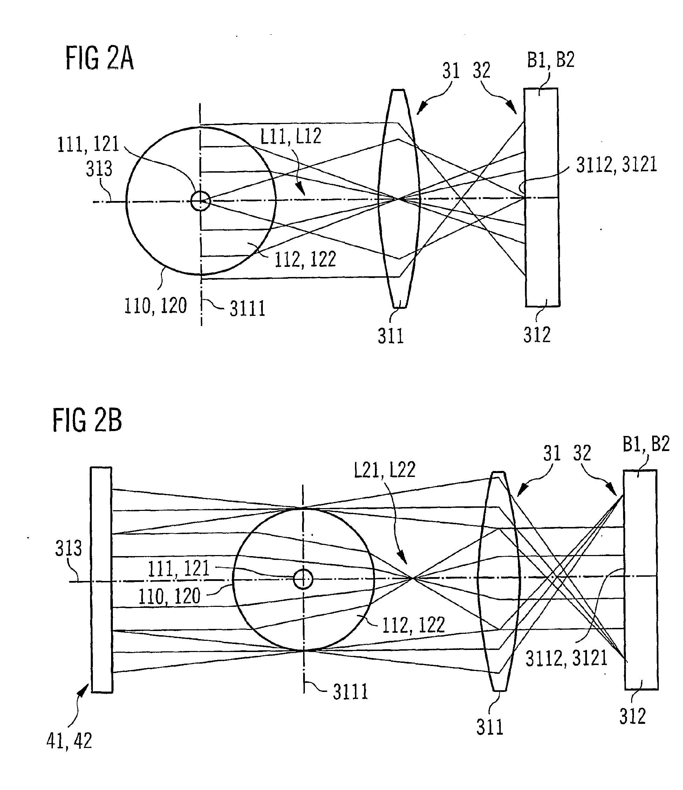

In einem dritten Schritt werden die nacheinander gemessenen und gespeicherten ersten und zweiten Intensitätsverteilungen ausgewertet und die Mäntel der Abschnitte 110 und 120 relativ zueinander ausgerichtet, um einen vorher festgelegten Versatz zwischen den Kernen der Abschnitte 110 und 120 einzustellen. In den Figuren 2A und 2B ist jeweils eine Anordnung zur Erfassung von Intensitätswerten dargestellt. Die Abschnitte 110 und 120 sind in der Objektebene 3111 der Abbildungsoptik 311 angeordnet. Der Sensor 312 ist in der Bildebene 3112 der Abbildungsoptik 311 angeordnet. Die Abbildungsoptik 311 ist als konvexe Linse dargestellt, kann aber auch eine Anordnung von Linsen und Spiegeln umfassen. Die Objektebene 3111 verläuft in Längsrichtung des Lichtwellenleiters 11 oder 12. Durch die Abbildungsoptik 311 wird ein linienhafter Bereich der Objektebene 3111 auf einen linienhaften Bereich der Bildebene 3112 abgebildet. Lichtstrahlen aus jeweils einem der Querschnitte der Abschnitte 110 und 120 werden daher auf jeweils einen linienhaften Bereich der Bildebene 3112 abgebildet. Der Sensor 312 umfasst eine zweidimensionale also flächenhafte Anordnung von Sensorelementen zur Erfassung von Intensitätswerten. Der Sensor kann also zumindest die Intensitätswerte von Lichtstrahlen aus ersten und zweiten Querschnitten der Abschnitte 110 und 120 erfassen. Um anhand der durch den Sensor 312 erfassten Intensitätswerte die Abschnitte 110 und 120 aufeinander auszurichten, werden erste und zweite Intensitätsverteilungen für Lichtstrahlen aus ersten und zweiten Querschnitten gemessen, wobei jeweils einer der ersten und zweiten Querschnitte in jeweils einem der Abschnitte 110 und 120 angeordnet ist. Zu jedem der beiden Abschnitte 110 und 120 wird also jeweils eine erste und eine zweite Intensitätsverteilung gemessen. Danach wird ein Versatz der Mäntel 112 und 122 der Lichtwellenleiter 11 und 12 eingestellt, um einen Versatz der Kerne 111 und 121 festzulegen.

In der Figur 2A ist ein Strahlengang für die Messung einer ersten Intensitätsverteilung dargestellt. Die Objektebene 3111 der Abbildungsoptik 311 verläuft durch die Kerne 111 und 121 der durch eine Wärmequelle erwärmten und zur Lichtemission angeregten Abschnitte 110 und 120. Von den Kernen 111 und 121 ausgehende erste Lichtbündel L11 und L12 werden infolge ihres nahezu senkrechten Einfalls an den Rändern der Mäntel 112 und 122 nur geringfügig gebrochen und folglich in der Bildebene 3112 fokussiert. Von ausserhalb des Kerns gelegenen Bereichen der Objektebene 3111 ausgehehendes Licht wird dagegen durch die Ränder der Mäntel 112 und 122 stärker gebrochen und nicht in der Bildebene 3112 fokussiert.

In der Figur 2B ist ein Strahlengang für die Messung einer zweiten Intensitätsverteilung dargestellt. Die Objektebene 3111 der Abbildungsoptik 311 verläuft durch die Mäntel 112 und 122 der durch die Lichtquelle 41 oder 42 beleuchteten Abschnitte 110 und 120. Von den Rändern der Mäntel 112 und 122 ausgehende zweite Lichtbündel L21 und L22 werden durch die Abbildungsoptik 311 in der Bildebene 3112 fokussiert. Durch die Abschnitte 110 und 120 gebrochenes Licht wird nicht in der Bildebene 3112 fokussiert. Jedoch führt dieses Licht zu zentralen Maxima in der Mitte der zweiten Intensitätsverteilungen, deren Lagen nicht von den Positionen der Kerne 111 und 121 abhängen.

Die Fokussierung der Abbildungsoptik 311 wird zwischen der Messung der ersten Intensitätsverteilung und der Messung der zweiten Intensitätsverteilung nicht verändert. Da also beiden Intensitätsverteilungen dieselbe Abbildung der Objektebene 3111 auf die Bildebene 3112 zugrunde liegt, sind räumlich aufgelöste Strukturen in den beiden Intensitätsverteilungen einander zuordenbar.

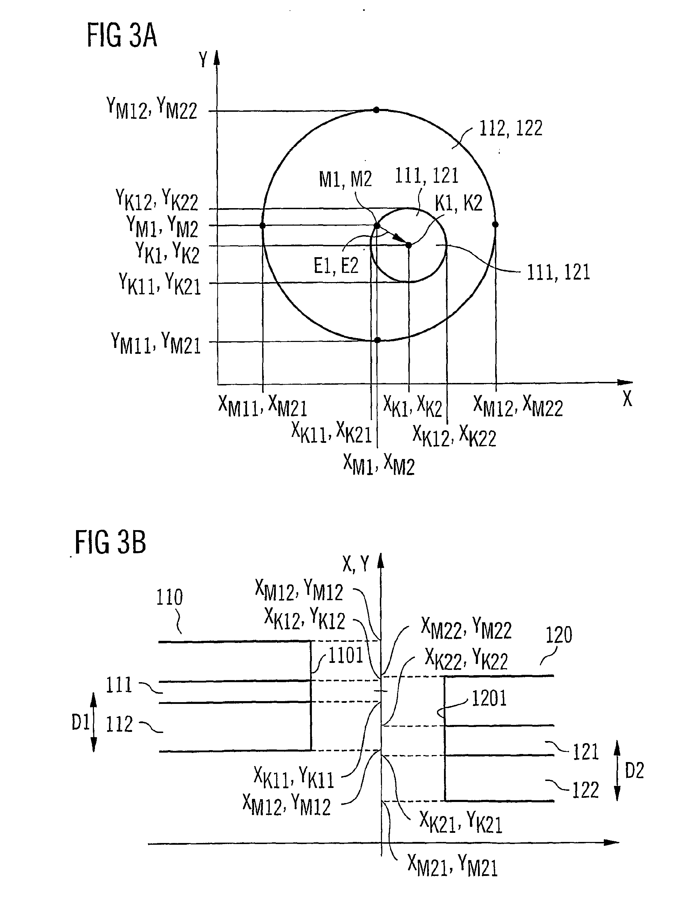

In der Figur 3A ist einer der Lichtwellenleiter 11 und 12 beziehungsweise einer der Abschnitte 110 und 120 im Querschnitt dargestellt. Jeweils einer der Kerne 111 und 121 ist von einem der Mäntel 112 und 122 umgeben. Jeweils einer der Kerne 111 und 121 weist einen der Kernmittelpunkte K1 und K2 auf. Jeweils einer der Mäntel 112 und 122 weist einen der Mantelmittelpunkte M1 und M2 auf. Die Kerne K1 und K2 weisen bezogen auf die Mäntel M1 und M2 die Exzentrizitäten beziehungsweise Versätze E1 und E2 auf. Bezüglich einer ersten Richtung X und einer zweiten Richtung Y der Querschnittsebene sind jeweils Koordinaten für untere Kernränder K11 und K21, obere Kernränder K12 und K22, untere Mantelränder M11 und M21 und obere Mantelränder M12 und M22 dargestellt.

Wenn die Exzentrizitäten E1 und E2 und die Positionen der Mäntel M1 und M2 bekannt sind, dann sind die Positionen der Kerne K1 und K2 festgelegt. Jeweils eine der Exzentrizitäten E1 und E2 kann aus den ersten und zweiten Intensitätsverteilungen für Lichtbündel aus einem Querschnitt eines der Abschnitte 110 und 120 bestimmt werden. Anschließend können die Kerne K1 und K2 über die Mäntel M1 und M2 positioniert werden.

In der Figur 3B sind die beiden Abschnitte 110 und 120 im Längsschnitt gezeigt. Die beiden Abschnitte 110 und 120 sind mit einem deutlichen Versatz in einer der Querrichtungen X und Y dargestellt. Die Exzentrizitäten E1 und E2 sind durch die Differenzen zwischen jeweils einem der Kernmittelpunkte K1 und K2 und dem entsprechenden der Mantelmittelpunkte M1 und M2 gegeben. Die Differenz zwischen dem Versatz ΔK der Kernmittelpunkte K1 und K2 und dem Versatz ΔM der Mantelmittelpunkte M1 und M2 ist die relative Exzentrizität ΔE. Wenn die relative Exzentrizität ΔE und der Versatz der Mantelmittelpunkte ΔM bekannt sind, dann ist der Versatz ΔK der Kernmittelpunkte K1 und K2 festgelegt. Die relative Exzentrizität ΔE kann aus den ersten und zweiten Intensitätsverteilungen beider Abschnitte 110,und 120 bestimmt werden. Anschließend kann ein Versatz ΔK der Kerne K1 und K2 über einen Versatz ΔM der Mäntel M1 und M2 festgelegt werden. Anstelle der Exzentrizitäten können auch die Abstände D1 und D2 zwischen jeweils einem der Kernmittelpunkte K1 und K2 und einem der Mantelränder M11, M12, M21 und M22 herangezogen werden, um die Kerne 111 und 121 über die Mantelränder M11, M12, M21 und M22 auszurichten.

Die in den Figuren 2A und 2B dargestellten Sensoren 311 und 312 sind in ersten und zweiten Bereichen B1 und B2 angeordnet, die sich jeweils in einer gewissen Entfernung den Abschnitten 110 und 120 in der Längsrichtung Z und einer der Querrichtungen X und Y erstrecken.

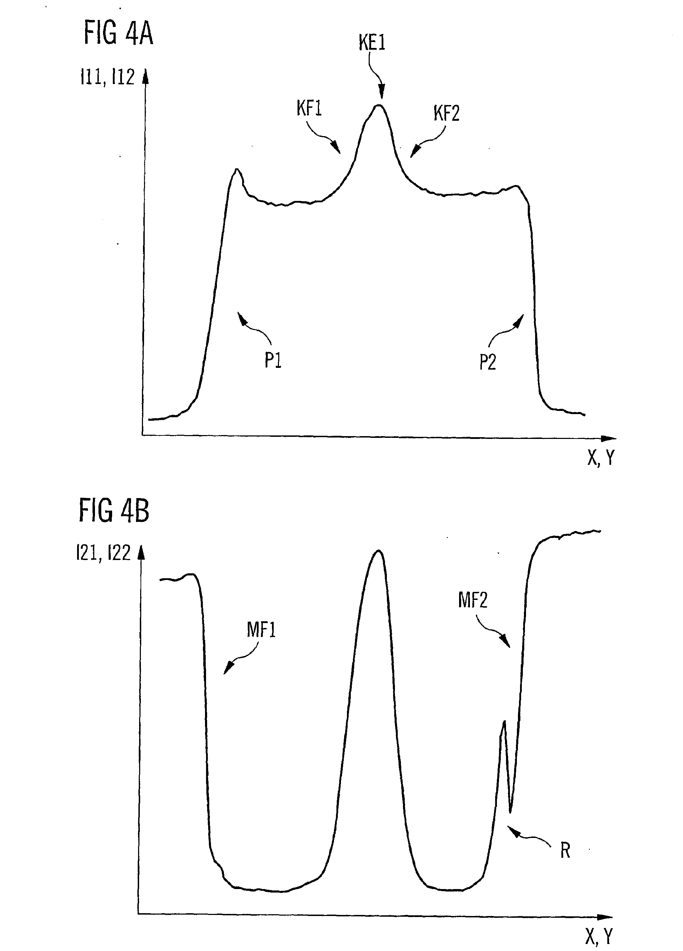

In der Figur 4A ist eine der ersten Intensitätsverteilungen I11 und I12 dargestellt. Die eine der ersten Intensitätsverteilungen I11 und I12 wird durch ein erstes Lichtbündel aus einem Querschnitt eines der Abschnitte 110 und 120 erzeugt. Das erste Lichtbündel wird durch Licht hervorgerufen, das von einem der Kerne 111 und 121 und dem entsprechenden der Mäntel 112 und 122 eines der Abschnitte 110 und 120 emittiert wird. Die Emission des Lichts wird angeregt, indem den Abschnitten 110 und 120 Wärme zugeführt wird. Die eine der ersten Intensitätsverteilungen I11 und I12 ist über einer der Richtungen X und Y aufgetragen. Es ergibt sich der dargestellte Verlauf mit einer zentralen Intensitätsspitze KE1, die durch zwei Flanken KF1 und KF2 begrenzt ist. Aus der Lage der Intensitätsspitze KE1 kann die Position eines der Kernmittelpunkte K1 und K2 bezüglich der einen der Richtungen X und Y bestimmt werden.

In der Figur 4B ist eine der zweiten Intensitätsverteilungen I21 und I22 dargestellt. Die eine der zweiten Intensitätsverteilungen I21 und I22 wird durch ein zweites Lichtbündel aus einem Querschnitt eines der Abschnitte 110 und 120 erzeugt. Das zweite Lichtbündel wird durch Licht hervorgerufen, das von einer Beleuchtungseinrichtung erzeugt und an den Abschnitten 110 und 120 gebrochen wird bzw. seitlich vorbeitritt. Die eine der zweiten Intensitätsverteilungen I21 und I22 ist über einer der Richtungen X und Y aufgetragen. Es ergibt sich der dargestellte Verlauf mit den zwei Flanken MF1 und MF2. Aus der Lage der Flanken MF1 und MF2 kann die Position eines der Mantelmittelpunkte M1 und M2 bezüglich der einen der Richtungen X und Y bestimmt werden.

Die in Figur 4B außerdem dargestellte Intensitätsspitze R wird durch Streulicht der Beleuchtungseinrichtung verursacht, das infolge seiner Reflexion an der Glasfaser in den Strahlengang der Aufnahmevorrichtung geraten ist. Bei der für diese Aufnahme verwendeten Apparatur schließen die Richtungen X und Y nur einen Winkel von 60° ein. Bei einem Winkel von 90° ist der Reflex zur Mitte verschoben.

Bei Kenntnis der ersten Intensitätsverteilungen I11 und I12 für jede der beiden Richtungen X und Y lassen sich die Positionen der Kernmittelpunkte K1 und K2 und deren Versatz ΔK in der durch X und Y aufgespannten Ebene festlegen. Bei Kenntnis der zweiten Intensitätsverteilungen I21 und I22 für jede der beiden Richtungen X und Y lassen sich die Positionen der Mantelmittelpunkte M1 und M2 und deren Versatz ΔM in der durch X und Y aufgespannten Ebene festlegen. Bei Kenntnis der ersten und zweiten Intensitätsverteilungen I11, I12, I21 und I22 für jede der beiden Richtungen X und Y lassen sich die Exzentrizitäten E1 und E2, und die relative Exzentrizität ΔE festlegen. Die relative Exzentrizität ΔE ist durch die Differenz zwischen dem Versatz ΔK der Kernmittelpunkte K1 und K2 und dem Versatz ΔM der Mantelmittelpunkte M1 und M2 gegeben.

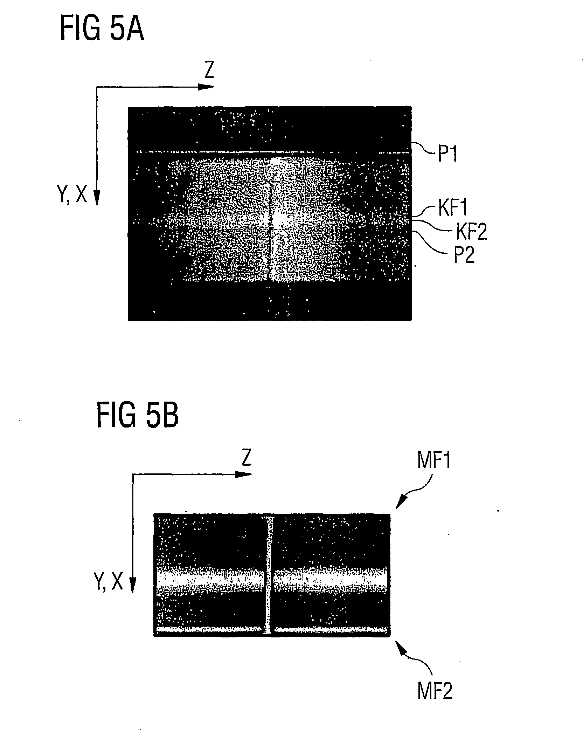

In Figur 5A sind die von einer der anhand von Figur 1 beschriebenen Aufnahmevorrichtungen 31 und 32 erfassten Intensitätswerte während der Erwärmung der jeweiligen Abschnitte 110 und 120 dargestellt. Die beiden Abschnitte 110 und 120 mit den Mänteln 112 und 122 und den heller leuchtenden Kernen 111 und 121 sind deutlich erkennbar. Wenn die Intensitätswerte entlang einer quer zur Längsachse Z durch einen der Abschnitte 110 und 120 verlaufenden Linie aufgetragen werden, dann ergibt sich die in Figur 4A dargestellte Intensitätsverteilung mit der Intensitätsspitze KE1 und den beiden Flanken KF1 und KF2.

In Figur 5B sind die von einer der anhand von Figur 1 beschriebenen Aufnahmevorrichtungen 31 und 32 erfassten Intensitätswerte während der Beleuchtung der Abschnitte 110 und 120 dargestellt. Die beiden Abschnitte 110 und 120 mit den scharf begrenzten Mänteln 112 und 122 sind deutlich erkennbar. Wenn die Intensitätswerte entlang einer quer zur Längsachse Z durch einen der Abschnitte 110 und 120 verlaufenden Linie aufgetragen werden, dann ergibt sich die in Figur 4B dargestellte Intensitätsverteilung mit den beiden Flanken MF1 und MF2.

In Figur 5A sind die Ränder der Mäntel 112 und 122 ebenfalls erkennbar. In einer denkbaren Variation des Verfahrens können aus den ersten Intensitätsverteilungen die Lagen der Kerne 111 und 112 und der Mäntel 112 und 122 bestimmt werden. Jedoch leuchtet im allgemeinen der Mantel schwächer als der Kern, so dass die Lage eines Mantelrandes mit einer geringeren Genauigkeit bestimmbar ist als die Lage eines Kernrandes. Ausserdem können sich fluoreszierende Verunreinigungen an der Oberfläche des Lichtwellenleiters befinden, die die Bestimmung der Lage des Mantelrandes erschweren.

### Bezugszeichenliste

| | |
|---|---|
| 11, 12 | Lichtwellenleiter |
| 110, 120 | Abschnitte der Lichtwellenleiter |
| 1101, 1201 | Endflächen der Abschnitte |
| 111, 121 | Kerne der Glasfasern |
| 112, 122 | Mäntel der Glasfasern |
| 21, 22 | Wärmequelle, Schweisselektroden |
| 31, 32 | Detektionseinrichtung, Aufnahmevorrichtungen |
| 311 | Abbildungsoptik |
| 313 | optische Achse einer Aufnahmevorrichtung |
| 3111 | Objektebene |
| 3112 | Bildebene |
| 312 | Sensor |
| 3121 | Feld von Sensorelementen |
| 41, 42 | Beleuchtungseinrichtung, Lichtquellen |
| 51, 52, 53 | Haltevorrichtung, Halterungen |
| 60 | Steuereinrichtung |
| 71, 72 | Speichereinheiten |
| X, Y | Querrichtungen |
| Z | Längsrichtung |
| L11, L12 | erste Lichtbündel |
| L21, L22 | zweite Lichtbündel |
| B1, B2 | erste und zweite Bereiche |
| I11, I12 | erste Intensitätsverteilungen |
| I21, I22 | zweite Intensitätsverteilungen |
| K1, K2 | Kernmittelpunkte |
| K11, K21 | untere/linke Kernränder |
| K12, K22 | obere/rechte Kernränder |
| M1, M2 | Mantelmittelpunkte |
| M11, M21 | untere/linke Mantelränder |
| M12, M22 | obere/rechte Mantelränder |
| KE1 | Intensitätsspitzen von I11 und I12 |
| KF1, KF2 | durch Ränder der Kerne bewirkte Flanken |
| MF1, MF2 | durch Ränder der Mäntel bewirkte Flanken |
| D1, D2 | Abstand vom Kernmittelpunkt zum Mantelrand |
| R | Reflex |

## Patentansprüche

1. Verfahren zur Bestimmung der Exzentrizität (E1, E2) eines Kerns eines Lichtwellenleiters (11, 12), umfassend die Schritte:
Bereitstellen eines Lichtwellenleiters (11, 12), der einen Kern (111, 121) und einen den Kern (111, 121) umgebenden Mantel (112, 122) aufweist,
Erwärmen eines Abschnittes (110, 120) des Lichtwellenleiters (11, 12) für eine vorgegebene Zeitspanne, so dass durch Emission von Licht aus dem Kern (111, 121) und dem Mantel (112, 122) ein erstes Lichtbündel (L11, L12) erzeugt wird,
Messen einer ersten Intensitätsverteilung (I11, I12), die durch das erste Lichtbündel (L11, L12) bewirkt wird, und Speichern der ersten Intensitätsverteilung,
Ermitteln einer Position (K1, K2) eines Mittelpunkts des Kerns (111, 121) aus der gespeicherten ersten Intensitätsverteilung (I11, I12),
Beleuchten des Abschnittes (110, 120) mit Licht, so dass durch teilweise Brechung des Lichts an dem Kern (111, 121) und dem Mantel (112, 122) ein zweites Lichtbündel (L21, L22) erzeugt wird,
Messen einer zweiten Intensitätsverteilung (I21, I22), die durch das zweite Lichtbündel (L21, L22) bewirkt wird, und Speichern der zweiten Intensitätsverteilung,
Ermitteln einer Position (M1, M2) des Mantels (112, 122) aus der gespeicherten zweiten Intensitätsverteilung (I21, I22),
Bestimmen der Exzentrizität (E1, E2) aus der ermittelten Position des Mittelpunkts (K1, K2) des Kerns (111, 121) und der ermittelten Position (M1, M2) des Mantels (112, 122), wobei die Exzentrizität eine Lage des Kerns bezogen auf eine Lage des Mantels angibt.

2. Verfahren nach Anspruch 1, bei dem der Schritt des Messens der zweiten Intensitätsverteilung (I21, I22) vor oder nach dem Schritt des Messens der ersten Intensitätsverteilung (I11, I12) durchgeführt wird.

3. Verfahren nach Anspruch 1 oder 2, bei dem die Schritte des Messens der ersten und zweiten Intensitätsverteilungen (I11, I12, I21, I22) in einem geringen zeitlichen Abstand voneinander durchgeführt werden.

4. Verfahren nach Anspruch 1 bis 3, umfassend den Schritt:
Abbilden einer durch den Abschnitt (110, 120) des Lichtwellenleiters (11, 12) verlaufenden Objektebene (3111) auf eine Bildebene (3112), wobei der Schritt des Messens der ersten Intensitätsverteilung (I11, I12) und der Schritt des Messens der zweiten Intensitätsverteilung (I21, I22) unter Beibehaltung der Objektebene (3111) durchgeführt werden.

5. Verfahren nach Anspruch 4, bei dem die Objektebene (3111) so gewählt wird, dass der Kern (111, 121) und der Mantel (112, 122) hinreichend scharf auf die Bildebene (3112) abgebildet werden.

6. Verfahren nach einem der Ansprüche 1 bis 5, bei dem die Schritte des Messens der ersten und zweiten Intensitätsverteilungen (I11, I12, I21, I22) jeweils ein Erfassen von Intensitätswerten in demselben quer zum Abschnitt (110, 120) des Lichtwellenleiters (11, 12) verlaufenden Bereich (B1, B2) umfassen.

7. Verfahren nach einem der Ansprüche 1 bis 6, das umfasst:
Bestimmen der Lage eines lokalen Extremums (KE1) der ersten Intensitätsverteilung (I11, I12), um **dadurch** die Position eines Kernmittelpunkts (K1, K2) festzulegen,
Bestimmen der Lagen zweier Flanken (MF1, MF2) der zweiten Intensitätsverteilung (I21, I22), um **dadurch** die Position eines Mantelmittelpunkts (M1, M2) festzulegen,
Bestimmen eines Abstands zwischen dem Kernmittelpunkt (K1, K2) und dem Mantelmittelpunkt (M1, M2), um **dadurch** eine Kernexzentrizität (E1, E2) festzulegen,
Verändern der Position des Mantelmittelpunkts (M1, M2) in Abhängigkeit von der Kernexzentrizität (E1, E2), um **dadurch** den Kernmittelpunkt (K1, K2) in eine vorher festgelegte Position zu bringen.

8. Verfahren nach einem der Ansprüche 1 bis 6, umfassend die Schritte:
Bestimmen der Lage eines lokalen Extremums (KE1) der ersten Intensitätsverteilung (I11, I12), um **dadurch** die Position eines Kernmittelpunkts (K1, K2) festzulegen,
Bestimmen der Lage einer Flanke (MF1, MF2) der zweiten Intensitätsverteilung (I21, I22), um **dadurch** die Position eines Mantelrandes (M11, M12, M21, M22) festzulegen,
Bestimmen eines Abstandes (D1, D2) zwischen dem Kernmittelpunkt (K1, K2) und dem Mantelrand (M11, M12, M21, M22),
Verändern der Position des Mantelrandes (M11, M12, M21, M22) in Abhängigkeit von dem Abstand (D1), um **dadurch** den Kernmittelpunkt (K1, K2) in eine vorher festgelegte Position zu bringen.

9. Verfahren nach einem der Ansprüche 1 bis 8, bei dem der der Schritt des Erwärmens des Abschnittes (110, 120) innerhalb einer kurzen Zeitspanne durchgeführt wird, so dass nur eine geringfügige Verformung des Lichtwellenleiters (11, 12) erfolgt.

10. Verfahren nach einem der Ansprüche 1 bis 9, bei dem das Erwärmen des Abschnittes (110, 120) ein Erzeugen eines Lichtbogens für eine Zeitspanne von mehreren Zehntelsekunden umfasst.

11. Verfahren nach einem der Ansprüche 1 bis 9, bei dem das Erwärmen des Abschnittes (110, 120) ein Erzeugen eines Laserstrahls für eine Zeitspanne von mehreren Zehntelsekunden umfasst.

12. Verfahren nach einem der Ansprüche 1 bis 11, bei dem das Messen der ersten und zweiten Intensitätsverteilungen (I11, I12, I21, I22) jeweils ein Erfassen von Intensitätswerten in einem ersten Bereich (B1) umfasst, wobei sich der erste Bereich (B1) quer zur Längsachse (Z) des Abschnitts (110, 120) in einer ersten Richtung (X) erstreckt.

13. Verfahren nach Anspruch 12, bei dem das Messen der ersten und zweiten Intensitätsverteilungen (I11, I12, I21, I22) jeweils ein Erfassen von Intensitätswerten in einem zweiten Bereich (B2) umfasst, wobei sich der zweite Bereich (B2) quer zur Längsachse (Z) des Abschnitts (110, 120) und quer zum ersten Bereich (B1) in einer zweiten Richtung (Y) erstreckt.

14. Verfahren nach Anspruch 12 oder 13, bei dem das Erfassen der Intensitätswerte in den ersten und zweiten Bereichen (B1, B2) gleichzeitig durchgeführt wird.

15. Verfahren nach Anspruch 12 oder 13, bei dem das Erfassen der Intensitätswerte in den ersten und zweiten Bereichen (B1, B2) nacheinander durchgeführt wird.

16. Verfahren zum Verbinden von mindestens zwei Lichtwellenleitern, umfassend die Schritte:
Bestimmen der Exzentrizität (E1) eines Kerns (111) von mindestens einem ersten Lichtwellenleiters (11) nach einem Verfahren gemäß einem der Ansprüche 1 bis 15;
Bestimmen der Exzentrizität (E2) eines Kerns (121) von mindestens einem zweiten Lichtwellenleiters (12) nach einem Verfahren gemäß einem der Ansprüche 1 bis 15;
Bestimmen einer relativen Exzentrizität (ΔE) aus den ermittelten jeweiligen Positionen der Mittelpunkte der Kerne der mindestens zwei Lichtwellenleiter und den ermittelten jeweiligen Positionen der Mäntel (112, 122) der mindestens zwei Lichtwellenleiter, wobei die relative Exzentrizität (ΔE) einen Versatz (ΔK) der jweiligen Kerne (111, 121) bezogen auf einen Versatz (ΔM) der jeweiligen Mäntel (112, 122) der Abschnitte (110, 120) der mindestens zwei Lichtwellenleiter angibt,
nachfolgend Einstellen des Versatzes (ΔM) zwischen den Mänteln (112, 122) in Abhängigkeit von der relativen Exzentrizität (ΔE), um den Versatz (ΔK) zwischen den Kernen (111, 121) festzulegen,
nachfolgend Verbinden der jeweiligen Abschnitte (110, 120) der mindestens zwei Lichtwellenleiter.

17. Verfahren nach Anspruch 16, umfassend die Schritte:
Bestimmen der Lage eines lokalen Extremums (KE1) aus jeweils einer der ersten Intensitätsverteilungen (I11, I12), um **dadurch** die Position jeweils eines Kernmittelpunkts (K1, K2) festzulegen,
Bestimmen der Lage zweier Flanken (MF1, MF2) aus jeweils einer der zweiten Intensitätsverteilungen (I21, I22), um die Position jeweils eines Mantelmittelpunkts (M1, M2) festzulegen,
Bestimmen der relativen Exzentrizität (ΔE) durch Bestimmen eines ersten Versatzes (ΔK) zwischen den Kernmittelpunkten (K1, K2) eines ersten und eines zweiten der Abschnitte (110, 120), Bestimmen eines zweiten Versatzes (ΔM) zwischen den Mantelmittelpunkten (M1, M2) des ersten und des zweiten der Abschnitte (110, 120) und Bestimmen einer Differenz zwischen dem ersten Versatz (ΔK) und dem zweiten Versatz (ΔM),
Einstellen des Versatzes (ΔM) der Mantelmittelpunkte (M1, M2), um den Versatz (ΔK) der Kernmittelpunkte (K1, K2) festzulegen.

18. Verfahren nach Anspruch 16 oder 17, bei dem die Schritte des Messens der jeweils einen ersten Intensitätsverteilung (I11, I12) und der jeweils einen zweiten Intensitätsverteilung (I21, I22) eines der Abschnitte (110, 120) jeweils ein Erfassen von Intensitätswerten in demselben Bereich (B11, B12, B21, B22) umfassen.

19. Verfahren nach Anspruch 17 oder 18, bei dem das Messen der ersten und zweiten Intensitätsverteilungen (I11, I12, I21, I22) ein Erfassen von Intensitätswerten in ersten Bereichen (B11, B12) umfasst, wobei jeweils einer der ersten Bereiche (B11, B12) Licht von einem der Abschnitte (110, 120) empfängt und sich quer zur Längsachse (Z) des einen der Abschnitte (110, 120) in einer ersten Richtung (X) erstreckt.

20. Verfahren nach Anspruch 19, bei dem das Messen der ersten und zweiten Intensitätsverteilungen (I11, I12, I21, I22) ein Erfassen von Intensitätswerten in zweiten Bereichen (B21, B22) umfasst, wobei jeweils einer (B21) der zweiten Bereiche (B21, B22) Licht von einem der Abschnitte (110, 120) empfängt, sich quer zur Längsachse (Z) des einen der Abschnitte (110, 120) erstreckt und sich quer zu einem der ersten Bereiche (B11, B12) in einer zweiten Richtung (Y) erstreckt.

21. Vorrichtung zum Verbinden von mindestens zwei Lichtwellenleitern (11, 12), die jeweils einen Kern (111, 121) und einen den Kern (111, 121) umgebenden Mantel (112, 122) aufweisen, umfassend:
eine Wärmequelle (21, 22) zur Erwärmung von jeweiligen Abschnitten (110, 120) der Lichtwellenleiter (11, 12) zum Verbinden der mindestens zwei Lichtwellenleiter durch ein Verschweißen der Lichtwellenleiter und zur Erzeugung erster Lichtbündel (L11, L12), die jeweils durch Emission von Licht durch den Kern (111, 121) und den Mantel (112, 122) eines der Abschnitte (110, 120) bewirkt sind,
eine Haltevorrichtung (51, 52, 53) zur Fixierung der Abschnitte (110, 120) der Lichtwellenleiter (11, 12), wobei die Haltevorrichtung zum Positionieren der Abschnitte (110, 120) ausgebildet ist,
eine Beleuchtungseinrichtung (41, 42) zur Beleuchtung der Abschnitte (110, 120) und zur Erzeugung zweiter Lichtbündel (L21, L22), die jeweils durch teilweise Brechung von Licht an dem Kern (111, 121) und dem Mantel (112, 122) eines der Abschnitte (110, 120) bewirkt sind,
eine Detektionseinrichtung (31, 32) zur Messung von ersten Intensitätsverteilungen (I11, I12), die durch die ersten Lichtbündel (L11, L12) bewirkt sind, und zur Messung von zweiten Intensitätsverteilungen (I21, I22), die durch die zweiten Lichtbündel (L21, L22) bewirkt sind,
eine Speichereinheit (71, 72) zur Speicherung der ersten und zweiten Intensitätsverteilungen (L11, L12, L21, L22),
eine Steuereinrichtung (100) zur Steuerung der Haltevorrichtung (51, 52, 53), die dazu ausgebildet ist, einen Versatz
der Mäntel (112, 122) in Abhängigkeit von den gespeicherten ersten und zweiten Intensitätsverteilungen (I11, I12, I21, I22) einzustellen, um einen vorher festgelegten Versatz der Kerne (111, 121) zu bewirken,
bei der die Steuereinrichtung (100) dazu ausgebildet ist, eine Position (K1, K2) eines Mittelpunkts des Kerns (111, 121) aus der gespeicherten ersten Intensitätsverteilung (I11, I12) und eine Position (M1, M2) des Mantels (112, 122) aus der gespeicherten zweiten Intensitätsverteilung (I21, I22) zu ermitteln,
bei der die Steuereinrichtung (100) dazu ausgebildet ist, eine Exzentrizität (E1, E2) aus der ermittelten Position des Mittelpunkts (K1, K2) des Kerns (111, 121) und der ermittelten Position (M1, M2) des Mantels (112, 122) zu ermitteln, wobei die Exzentrizität eine Lage des Kerns bezogen auf eine Lage des Mantels angibt.

22. Vorrichtung nach Anspruch 21, bei der die Wärmequelle (31, 32) Schweisselektroden (21, 22) zur Erzeugung eines Lichtbogens umfasst.

23. Vorrichtung nach Anspruch 21 oder 22, bei der eine Haltevorrichtung (51, 52, 53) zur Positionierung der Endabschnitte (1101, 1201) in einer Längsrichtung (Z) und in zwei Querrichtungen (X, Y) vorgesehen ist.

24. Vorrichtung nach einem der Ansprüche 21 bis 23, bei der die Detektionseinrichtung (31, 32) mindestens eine Aufnahmevorrichtung (311, 312) mit einer Abbildungsoptik (311) und einem Sensor (312) umfasst, die Abbildungsoptik (311) eine durch die Abschnitte (110, 120) verlaufende Objektebene (3111) und eine durch den Sensor (312) verlaufende Bildebene (3112) aufweist und die Objektebene (3111) so eingestellt ist, dass die Kerne (111, 121) und die Mäntel (112, 122) der Abschnitte (110, 120) hinreichend scharf auf die Bildebene (3112) abgebildet werden.

25. Vorrichtung nach Anspruch 24, bei der der Sensor (312) ein flächenhaft angeordnetes Feld von Sensorelementen (3121) zur Erfassung von Intensitätswerten der ersten und zweiten Intensitätsverteilungen (I11, I12, I21, I22) umfasst.

26. Vorrichtung nach Anspruch 24, bei der der Sensor (312) ein linienhaft angeordnetes Feld von Sensorelementen (3121) zur Erfassung von Intensitätswerten der ersten und zweiten Intensitätsverteilungen (I11, I12, I21, I22) umfasst.

27. Vorrichtung nach einem der Ansprüche 21 bis 26 bei der die Detektionseinrichtung (31, 32) mindestens zwei optische Abbildungssysteme (31, 32) mit jeweils einer optischen Achse (313) umfasst, wobei die optischen Achsen (313) eines ersten (31) und eines zweiten (32) der mindestens zwei Aufnahmevorrichtungen (31, 32) quer zueinander und quer zur Längsachse der Abschnitte (110, 120) orientiert sind.

28. Vorrichtung nach Anspruch 27, bei der die Abschnitte (110, 120) der mindestens zwei Lichtwellenleiter (11, 12) in Strahlengängen angeordnet sind, die jeweils zwischen einer Lichtquelle (41 oder 42) der Beleuchtungseinrichtung (41, 42) und einer der mindestens zwei Aufnahmevorrichtungen (31, 32) verlaufen.

## Claims

1. A method of determining the eccentricity (E1, E2) of a core of an optical waveguide (11, 12), comprising the steps:
providing an optical waveguide (11, 12) comprising a core (111, 121) and a cladding (112, 122) surrounding the core (111, 121),
heating a section (110, 120) of the optical waveguide (11, 12) for a predefined period of time so that a first pencil of rays (L11, L12) is produced by emission of light from the core (111, 121) and the cladding (112, 122),
measuring a first intensity distribution (I11, I12) caused by the first pencil of rays (L11, L12), and storing the first intensity distribution,
establishing a position (K1, K2) of a center point of the core (111, 121) from the stored first intensity distribution (I11, I12),
illuminating the section (110, 120) with light so that a second pencil of rays (L21, L22) is produced by partial refraction of the light on the core (111, 121) and the cladding (112, 122),
measuring a second intensity distribution (I21, I22) caused by the second pencil of rays (L21, L22), and storing the second intensity distribution,
establishing a position (M1, M2) of the cladding (112, 122) from the stored second intensity distribution (I21, I22), determining the eccentricity (E1, E2) from the established position of the center point (K1, K2) of the core (111, 121) and from the established position (M1, M2) of the cladding (112, 122), the eccentricity indicating a location of the core related to a location of the cladding.

2. The method according to claim 1, wherein the step of measuring the second intensity distribution (I21, I22) is carried out before or after the step of measuring the first intensity distribution (I11, I12).

3. The method according to claim 1 or 2, wherein the steps of measuring the first and second intensity distributions (I11, I12, I21, I22) are carried out in a small temporal distance from each other.

4. The method according to claim 1 to 3, comprising the step:
imaging an object plane (3111), extending through the section (110, 120) of the optical waveguides (11, 12), on an image plane (3112), the step of measuring the first intensity distribution (I11, I12) and the step of measuring the second intensity distribution (I21, I22) being carried out with maintaining the object plane (3111).

5. The method according to claim 4, wherein the object plane (3111) is chosen such that the core (111, 121) and the cladding (112, 122) are imaged on the image plane (3112) with sufficient sharpness.

6. The method according to any of the claims 1 to 5, wherein the steps of measuring the first and second intensity distributions (I11, I12, I21, I22) each comprise a detection of intensity values in the same area (B1, B2) extending transverse to the section (110, 120) of the optical waveguide (11, 12).

7. The method according to any of the claims 1 to 6, comprising:
determining the location of a local extremum (KE1) of the first intensity distribution (I11, I12) in order to define the position of a core center point (K1, K2),
determining the location of two edges (MF1, MF2) of the second intensity distribution (I21, I22) in order to define the position of a cladding center point (M1, M2),
determining a distance between the core center point (K1, K2) and the cladding center point (M1, M2) in order to define a core eccentricity (E1, E2),
changing the position of the cladding center point (M1, M2) depending on the core eccentricity (E1, E2) in order to move the core center point (K1, K2) to a predefined position.

8. The method according to any of the claims 1 to 6, comprising the steps:
determining the location of a local extremum (KE1) of the first intensity distribution (I11, I12) in order to define the position of a core center point (K1, K2),
determining the location of an edge (MF1, MF2) of the second intensity distribution (I21, I22) in order to define the position of a cladding face (M11, M12, M21, M22),
determining a distance (D1, D2) between the core center point (K1, K2) and the cladding face (M11, M12, M21, M22),
changing the position of the cladding face (M11, M12, M21, M22) depending on the distance (D1) in order to move the core center point (K1, K2) to a predefined position.

9. The method according to any of the claims 1 to 8, wherein the step of heating the section (110, 120) is carried out within a short period of time so that only a slight deformation of the optical waveguide (11, 12) occurs.

10. The method according to any of the claims 1 to 9, wherein the heating of the section (110, 120) comprises producing an electric arc for a period of time of several tenths of a second.

11. The method according to any of the claims 1 to 9, wherein the heating of the section (110, 120) comprises producing a laser beam for a period of time of several tenths of a second.

12. The method according to any of the claims 1 to 11, wherein the measuring of the first and second intensity distributions (I11, I12, I21, I22) each comprise a detection of intensity values in a first area (B1), the first area (B1) extending transverse to the longitudinal axis (Z) of the section (110, 120) in a first direction (X).

13. The method according to claim 12, wherein the measuring of the first and second intensity distributions (I11, I12, I21, I22) each comprise a detection of intensity values in a second area (B2), the second area (B2) extending transverse to the longitudinal axis (Z) of the section (110, 120) and transverse to the first area (B1) in a second direction (Y).

14. The method according to claim 12 or 13, wherein the detection of the intensity values in the first and second areas (B1, B2) is carried out at the same time.

15. The method according to claim 12 or 13, wherein the detection of the intensity values in the first and second areas (B1, B2) is carried out in succession.

16. A method of connecting at least two optical waveguides, comprising the steps:
determining the eccentricity (E1) of a core (111) of at least a first optical waveguide (11) according to a method of any of the claims 1 to 15;
determining the eccentricity (E2) of a core (121) of at least a second optical waveguide (12) according to a method of any of the claims 1 to 15;
determining a relative eccentricity (ΔE) from the established respective positions of the center points of the cores of the at least two optical waveguides and from the established respective positions of the claddings (112, 122) of the at least two optical waveguides, the relative eccentricity (ΔE) indicating an offset (ΔK) of the respective cores (111, 121) related to an offset (ΔM) of the respective claddings (112, 122) of the sections (110, 120) of the at least two optical waveguides,
subsequently adjusting the offset (ΔM) between the claddings (112, 122) depending on the relative eccentricity (ΔE) to define the offset (ΔK) between the cores (111, 121),
subsequently connecting the respective sections (110, 120) of the at least two optical waveguides.

17. The method according to claim 16, comprising the steps:
determining the location of a local extremum (KE1) from respectively one of the first intensity distributions (I11, I12) in order to define the position of a core center point (K1, K2) each,
determining the location of two edges (MF1, MF2) from respectively one of the second intensity distributions (I21, I22) in order to define the position of a cladding center point (M1, M2) each,
determining the relative eccentricity (ΔE) by determining a first offset (ΔK) between the core center points (K1, K2) of a first and of a second of the sections (110, 120), determining a second offset (ΔM) between the cladding center points (M1, M2) of the first and of the second of the sections (110, 120) and determining a difference between the first offset (ΔK) and the second offset (ΔM),
adjusting the offset (ΔM) of the cladding center points (M1, M2) to define the offset (ΔK) of the core center points (K1, K2).

18. The method according to claim 16 or 17, wherein the steps of measuring the respectively first intensity distribution (I11, I12) and the respectively second intensity distribution (I21, I22) of one of the sections (110, 120) comprise a detection of intensity values in the same area (B11, B12, B21, B22) in each case.

19. The method according to claim 17 or 18, wherein the measuring of the first and second intensity distributions (I11, I12, I21, I22) comprises a detection of intensity values in first areas (B11, B12), one of the first areas (B11, B12) receiving light from one of the sections (110, 120) and extending transverse to the longitudinal axis (Z) of the one of the sections (110, 120) in a first direction (X).

20. The method according to claim 19, wherein the measuring of the first and second intensity distributions (I11, I12, I21, I22) comprises a detection of intensity values in second areas (B21, B22), one (B21) of the second areas (B21, B22) receiving light from one of the sections (110, 120), extending transverse to the longitudinal axis (Z) of the one of the sections (110, 120) and extending transverse to one of the first areas (B11, B12) in a second direction (Y).

21. A device for connecting at least two optical waveguides (11, 12) which each comprise a core (111, 121) and a cladding (112, 122) surrounding the core (111, 121), comprising:
a heat source (21, 22) for heating respective sections (110, 120) of the optical waveguides (11, 12) for connecting the at least two optical waveguides by welding the optical waveguides and for producing first pencils of rays (L11, L12) which each are caused by an emission of light through the core (111, 121) and the cladding (112, 122) of one of the sections (110, 120),
a holding device (51, 52, 53) for the fixation of the sections (110, 120) of the optical waveguides (11, 12), the holding device being designed for positioning the sections (110, 120),
an illumination means (41, 42) for illuminating the sections (110, 120) and for producing second pencils of rays (L21, L22) which each are caused by a partial refraction of light on the core (111, 121) and the cladding (112, 122) of one of the sections (110, 120),
a detection means (31, 32) for measuring first intensity distributions (I11, I12) caused by the first pencils of rays (L11, L12) and for measuring second intensity distributions (I21, I22) caused by the second pencils of rays (L21, L22),
a memory unit (71, 72) for storing the first and second intensity distributions (L11, L12, L21, L22),
a control means (100) for controlling the holding device (51, 52, 53), which is designed to adjust an offset of the claddings (112, 122) depending on the stored first and second intensity distributions (I11, I12, I21, I22) to cause a predefined offset of the cores (111, 121),
in which the control means (100) is designed to establish a position (K1, K2) of a center point of the core (111, 121) from the stored first intensity distribution (I11, I12) and a position (M1, M2) of the cladding (112, 122) from the stored second intensity distribution (I21, I22),
in which the control means (100) is designed to establish an eccentricity (E1, E2) from the established position of the center point (K1, K2) of the core (111, 121) and from the established position (M1, M2) of the cladding (112, 122), the eccentricity indicating a location of the core related to a location of the cladding.

22. The device according to claim 21, wherein the heat source (31, 32) comprises welding electrodes (21, 22) for producing an electric arc.

23. The device according to claim 21 or 22, wherein a holding device (51, 52, 53) is provided for positioning the end sections (1101, 1201) in a longitudinal direction (Z) and in two transversal directions (X, Y).

24. The device according to any of the claims 21 to 23, wherein the detection means (31, 32) comprises at least one picture device (311, 312) including an imaging optics (311) and a sensor (312), the imaging optics (311) comprising an object plane (3111) extending through the sections (110, 120) and an image plane (3112) extending through the sensor (312), and the object plane (3111) being adjusted such that the cores (111, 121) and the claddings (112, 122) of the sections (110, 120) are imaged on the image plane (3112) with sufficient sharpness.

25. The device according to claim 24, wherein the sensor (312) comprises a field of sensor elements (3121) which are arranged in an array and intended for detecting intensity values of the first and second intensity distributions (I11, I12, I21, 122).

26. The device according to claim 24, wherein the sensor (312) comprises a field of sensor elements (3121) which are arranged in a line and intended for detecting intensity values of the first and second intensity distributions (I11, I12, I21, 122).

27. The device according to any of the claims 21 to 26, wherein the detection means (31, 32) comprises at least two optical imaging systems (31, 32) with one optical axis (313) each, the optical axes (313) of a first (31) and of a second (32) of the at least two picture devices (31, 32) being oriented transverse to each other and transverse to the longitudinal axis of the sections (110, 120).

28. The device according to claim 27, wherein the sections (110, 120) of the at least two optical waveguides (11, 12) are arranged in beam paths which each extend between a light source (41 or 42) of the illumination means (41, 42) and one of the at least two picture devices (31, 32).

## Revendications

1. Procédé pour déterminer l'excentricité (E1, E2) d'un noyau d'un guide d'ondes optiques (11, 12), comprenant les étapes :
mise à disposition d'un guide d'ondes optiques (11, 12) qui présente un noyau (111, 121) et une gaine (112, 122) entourant le noyau (111, 121),
chauffage d'un tronçon (110, 120) du guide d'ondes optiques (11, 12) pour un intervalle de temps prédéterminé de sorte qu'un premier faisceau de lumière (L11, L12) soit produit par émission de lumière à partir du noyau (111, 121) et de la gaine (112, 122),
mesure d'une première distribution d'intensité (I11, I12) qui est provoquée par le premier faisceau de lumière (L11, L12), et enregistrement de la première distribution d'intensité,
détermination d'une position (K1, K2) d'un milieu du noyau (111, 121) à partir de la première distribution d'intensité enregistrée (I11, I12),
éclairage du tronçon (110, 120) avec de la lumière de sorte qu'un deuxième faisceau de lumière (L21, L22) soit produit par réfraction partielle de la lumière au niveau du noyau (111, 121) et de la gaine (112, 122),
mesure d'une deuxième distribution d'intensité (I21, I22) qui est provoquée par le deuxième faisceau de lumière (L21, L22), et enregistrement de la deuxième distribution d'intensité, détermination d'une position (M1, M2) de la gaine (112, 122) à partir de la deuxième distribution d'intensité enregistrée (I21, I22),
détermination de l'excentricité (E1, E2) à partir de la position déterminée du milieu (K1, K2) du noyau (111, 121) et de la position déterminée (M1, M2) de la gaine (112, 122), l'excentricité indiquant un emplacement du noyau par rapport à un emplacement de la gaine.

2. Procédé selon la revendication 1, où l'étape de mesure de la deuxième distribution d'intensité (I21, I22) est effectuée avant ou après l'étape de mesure de la première distribution d'intensité (I11, I12).

3. Procédé selon la revendication 1 ou 2, où les étapes de mesure de la première et de la deuxième distribution d'intensité (I11, I12, I21, I22) sont effectuées à un faible écart de temps l'une de l'autre.

4. Procédé selon la revendication 1 à 3, comprenant l'étape :
représentation sur un plan d'image (3112) d'un plan d'objet (3111) passant par le tronçon (110, 120) du guide d'ondes optiques, l'étape de mesure de la première distribution d'intensité (I11, I12) et l'étape de mesure de la deuxième distribution d'intensité (I21, I22) étant effectuées en conservant le plan d'objet (3111).

5. Procédé selon la revendication 4, où le plan d'objet (3111) est choisi de telle façon que le noyau (111, 121) et la gaine (112, 122) soient représentés de manière suffisamment nette sur le plan d'image (3112).

6. Procédé selon l'une des revendications 1 à 5, où les étapes de mesure de la première et de la deuxième distribution d'intensité (I11, I12, I21, I22) comprennent respectivement une acquisition de valeurs d'intensité dans la même zone (B1, B2) passant perpendiculairement au tronçon (110, 120) du guide d'ondes optiques (11, 12).

7. Procédé selon l'une des revendications 1 à 6, qui comprend :
détermination de l'emplacement d'un extremum local (KE1) de la première distribution d'intensité (I11, I12) pour définir ainsi la position d'un milieu de noyau (K1, K2),
détermination des emplacements de deux flancs (MF1, MF2) de la deuxième distribution d'intensité (I21, I22) pour définir ainsi la position d'un milieu de gaine (M1, M2),
détermination d'un écart entre le milieu de noyau (K1, K2) et le milieu de gaine (M1, M2) pour définir ainsi une excentricité de noyau (E1, E2),
modification de la position du milieu de gaine (M1, M2) en fonction de l'excentricité de noyau (E1, E2) pour amener ainsi le milieu de noyau (K1, K2) dans une position définie précédemment.

8. Procédé selon l'une des revendications 1 à 6, comprenant les étapes :
détermination de l'emplacement d'un extremum local (KE1) de la première distribution d'intensité (I11, I12) pour définir ainsi la position d'un milieu de noyau (K1, K2),
détermination de l'emplacement d'un flanc (MF1, MF2) de la deuxième distribution d'intensité (I21, I22) pour définir ainsi la position d'un bord de gaine (M11, M12, M21, M22),
détermination d'un écart (D1, D2) entre le milieu de noyau (K1, K2) et le bord de gaine (M11, M12, M21, M22),
modification de la position du bord de gaine (M11, M12, M21, M22) en fonction de l'écart (D1) pour amener ainsi le milieu de noyau (K1, K2) dans une position définie précédemment.

9. Procédé selon l'une des revendications 1 à 8, où l'étape de chauffage du tronçon (110, 120) est effectué dans un intervalle de temps bref de sorte que seule une légère déformation du guide d'ondes optiques (11, 12) ait lieu.

10. Procédé selon l'une des revendications 1 à 9, où le chauffage du tronçon (110, 120) comprend une production d'un arc électrique pendant un intervalle de temps de plusieurs dixièmes de seconde.

11. Procédé selon l'une des revendications 1 à 9, où le chauffage du tronçon (110, 120) comprend une production d'un rayon laser pendant un intervalle de temps de plusieurs dixièmes de seconde.

12. Procédé selon l'une des revendications 1 à 11, où la mesure de la première et de la deuxième distribution d'intensité (I11, I12, I21, I22) comprend respectivement une acquisition de valeurs d'intensité dans une première zone (B1), la première zone (B1) s'étendant dans une première direction (X) perpendiculairement à l'axe longitudinal (Z) du tronçon (110, 120).

13. Procédé selon la revendication 12, où la mesure de la première et de la deuxième distribution d'intensité (I11, I12, I21, I22) comprend respectivement une acquisition de valeurs d'intensité dans une deuxième zone (B2), la deuxième zone (B2) s'étendant dans une deuxième direction (Y) perpendiculairement à l'axe longitudinal (Z) du tronçon (110, 120) et perpendiculairement à la première zone (B1).

14. Procédé selon la revendication 12 ou 13, où l'acquisition des valeurs d'intensité est effectuée en même temps dans la première et la deuxième zone (B1, B2).

15. Procédé selon la revendication 12 ou 13, où l'acquisition des valeurs d'intensité est effectuée successivement dans la première et la deuxième zone (B1, B2).

16. Procéder pour connecter au moins deux guides d'ondes optiques, comprenant les étapes :
détermination de l'excentricité (E1) d'un noyau (111) d'au moins un premier guide d'ondes optiques (11) selon un procédé conforme à l'une des revendications 1 à 15 ;
détermination de l'excentricité (E2) d'un noyau (121) d'au moins un deuxième guide d'ondes optiques (12) selon un procédé conforme à l'une des revendications 1 à 15 ;
détermination d'une excentricité relative (ΔE) à partir des positions respectives déterminées des milieux des noyaux des au moins deux guides d'ondes optiques et des positions respectives déterminées des gaines (112, 122) des au moins deux guides d'ondes optiques, l'excentricité relative (ΔE) indiquant un décalage ((ΔK) des noyaux respectifs (111, 121) par rapport à un décalage (ΔM) des gaines respectives (112, 122) des tronçons (110, 120) des au moins deux guides d'ondes optiques,
consécutivement, réglage du décalage (ΔM) entre les gaines (112, 122) en fonction de l'excentricité relative (ΔE) pour définir le décalage (ΔK) entre les noyaux (111, 121),
consécutivement, connexion des tronçons respectifs (110, 120) des au moins deux guides d'ondes optiques.

17. Procédé selon la revendication 16, comprenant les étapes :
détermination de l'emplacement d'un extremum local (KE1) à partir de respectivement une des premières distributions d'intensité (I11, I12) pour définir ainsi la position de respectivement un milieu de noyau (K1, K2),
détermination de l'emplacement de deux flancs (MF1, MF2) à partir de respectivement une des deuxièmes distributions d'intensité (I21, I22) pour définir la position de respectivement un milieu de gaine (M1, M2),
détermination de l'excentricité relative (ΔE) par détermination d'un premier décalage (ΔK) entre les milieux de noyau (K1, K2) d'un premier et d'un deuxième des tronçons (110, 120), détermination d'un deuxième décalage (ΔM) entre les milieux de gaine (M1, M2) du premier et du deuxième des tronçons (110, 120) et détermination d'une différence entre le premier décalage (ΔK) et du deuxième décalage (ΔM),
réglage du décalage (ΔM) des milieux de gaine (M1, M2) pour définir le décalage (ΔK) des milieux de noyau (K1, K2).

18. Procédé selon la revendication 16 ou 17, où les étapes de mesure de respectivement l'une première distribution d'intensité (I11, I12) et de respectivement l'une deuxième distribution d'intensité (I21, I22) d'un des tronçons (110, 120) comprennent respectivement une acquisition de valeurs d'intensité dans la même zone (B11, B12, B21, B22).

19. Procédé selon la revendication 17 ou 18, où la mesure de la première et de la deuxième distribution d'intensité (I11, I12, I21, I22) comprend une acquisition de valeurs d'intensité dans des premières zones (B11, B12), respectivement une des premières zones (B11, B12) recevant de la lumière d'un des tronçons (110, 120) et s'étendant dans une première direction (X) perpendiculairement à l'axe longitudinal (Z) de l'un des tronçons (110, 120).

20. Procédé selon la revendication 19, où la mesure de la première et de la deuxième distribution d'intensité (I11, I12, I21, I22) comprend une acquisition de valeurs d'intensité dans des deuxièmes zones (B21, B22), respectivement une (B21) des deuxièmes zones (B21, B22) recevant de la lumière d'un des tronçons (110, 120), s'étendant perpendiculairement à l'axe longitudinal (Z) de l'un des tronçons (110, 120) et s'étendant dans une deuxième direction (Y) perpendiculairement à une des premières zones (B11, B12).

21. Dispositif pour connecter au moins deux guides d'ondes optiques (11, 12) qui présentent respectivement un noyau (111, 121) et une gaine (112, 122) entourant le noyau (111, 121), comprenant :
une source de chaleur (21, 22) pour chauffer des tronçons respectifs (110, 120) des guides d'ondes optiques (11, 12) pour connecter les au moins deux guides d'ondes optiques par un soudage des guides d'ondes optiques et pour produire des premiers faisceaux de lumière (L11, L12) qui sont provoqués respectivement par émission de lumière par le noyau (111, 121) et la gaine (112, 122) d'un des tronçons (110, 120),
un dispositif de maintien (51, 52, 53) pour fixer les tronçons (110, 120) des guides d'ondes optiques (11, 12), le dispositif de maintien étant constitué pour positionner les tronçons (110, 120),
un dispositif d'éclairage (41, 42) pour éclairer les tronçons (110, 120) et pour produire des deuxièmes faisceaux de lumière (L21, L22) qui sont provoqués respectivement par réfraction partielle de lumière au niveau du noyau (111, 121) et de la gaine (112, 122) d'un des tronçons (110, 120), un dispositif de détection (31, 32) pour mesurer des premières distributions d'intensité (I11, I12) qui sont provoquées par les premiers faisceaux de lumière (L11, L12) et pour mesurer des deuxièmes distributions d'intensité (I21, I22) qui sont provoquées par les deuxièmes faisceaux de lumière (L21, L22),
une unité de mémoire (71, 72) pour enregistrer les premières et deuxièmes distributions d'intensité (L11, L12, L21, L22),
un dispositif de commande (100) pour commander le dispositif de maintien (51, 52, 53), qui est constitué pour régler un décalage des gaines (112, 122) en fonction des premières et deuxièmes distributions d'intensité (I11, I12, I21, I22) pour provoquer un décalage défini précédemment des noyaux (111, 121),
où le dispositif de commande (100) est constitué pour déterminer une position (K1, K2) d'un milieu du noyau (111, 121) à partir de la première distribution d'intensité enregistrée (I11, I12) et
une position (M1, M2) de la gaine (112, 122) à partir de la deuxième distribution d'intensité enregistrée (I21, I22),
où le dispositif de commande (100) est constitué pour déterminer une excentricité (E1, E2) à partir de la position déterminée du milieu (K1, K2) du noyau (111, 121) et de la position déterminée (M1, M2) de la gaine (112, 122), l'excentricité indiquant un emplacement du noyau par rapport à un emplacement de la gaine.

22. Dispositif selon la revendication 21, où la source de chaleur (31, 32) comprend des électrodes de soudage (21, 22) pour produire un arc électrique.

23. Dispositif selon la revendication 21 ou 22, où un dispositif de maintien (51, 52, 53) est prévu pour positionner les tronçons finaux (1101, 1201) dans une direction longitudinale (Z) et dans deux directions perpendiculaires (X, Y).

24. Dispositif selon l'une des revendications 21 à 23, où le dispositif de détection (31, 32) comprend au moins un dispositif de logement (311, 312) avec une optique de représentation (311) et un capteur (312), l'optique de représentation (311) présente un plan d'objet (3111) passant par les tronçons (110, 120) et un plan d'image (3112) passant par le capteur (312), et le plan d'objet (3111) est réglé de telle façon que les noyaux (111, 121) et les gaines (112, 122) des tronçons (110, 120) soient représentés de manière suffisamment nette sur le plan d'image (3112).

25. Dispositif selon la revendication 24, où le capteur (312) comprend un champ disposé surfaciquement d'éléments de capteur (3121) pour acquérir des valeurs d'intensité des premières et deuxièmes distributions d'intensité (I11, I12, I21, I22).

26. Dispositif selon la revendication 24, où le capteur (312) comprend un champ disposé linéairement d'éléments de capteur (3121) pour acquérir des valeurs d'intensité des premières et deuxièmes distributions d'intensité (I11, I12, I21, I22).

27. Dispositif selon l'une des revendications 21 à 26, où le dispositif de détection (31, 32) comprend au moins deux systèmes de représentation optiques (31, 32) avec respectivement un axe optique (313), les axes optiques (313) d'un premier (31) et d'un deuxième (32) des au moins deux dispositifs de logement (31, 32) sont orientés perpendiculairement l'un par rapport à l'autre et perpendiculairement à l'axe longitudinal des tronçons (110, 120).

28. Dispositif selon la revendication 27, où les tronçons (110, 120) des au moins deux guides d'ondes optiques (11, 12) sont disposés dans des chemins de rayons qui passent respectivement entre une source de lumière (41 ou 42) du dispositif d'éclairage (41, 42) et un des au moins deux dispositifs de logement (31, 32).
